# EUROPÄISCHE PATENTSCHRIFT

(11) **EP 2 714 308 B1**
(45) Veröffentlichungstag und Bekanntmachung des Hinweises auf die Patenterteilung: **18.01.2017**
(21) Anmeldenummer: 12721853.5
(22) Anmeldetag: 18.05.2012
(51) Int. Cl.: B23B 3/30, B23Q 39/02, B23B 3/16, B23Q 39/00

(54) **WERKZEUGMASCHINE**
MACHINE TOOL
MACHINE-OUTIL

(30) Priorität: 31.05.2011 DE 102011076834
(43) Veröffentlichungstag der Anmeldung: 09.04.2014
(73) Patentinhaber: Gildemeister Italiana S.p.A., 24030 Brembate di Sopra (BG) (IT)
(72) Erfinder: WALZ, Jürgen, 72636 Frickenhausen (DE); RIGOLONE, Franco, I-24010 Ponteranica (BG) (IT); DEURINGER, Gottfried, 82538 Geretsried (DE); ROTA, Renato, I-24030 Carvico (BG) (IT); GERST, Manuel, 33619 Bielefeld (DE)
(74) Vertreter: MERH-IP Matias Erny Reichl Hoffmann Patentanwälte PartG mbB
(86) Internationale Anmeldenummer: PCT/EP2012/059284
(87) Internationale Veröffentlichungsnummer: WO 2012/163698

(56) Entgegenhaltungen:
- EP-A1- 1 160 052
- EP-A1- 1 897 640
- DE-A1- 19 528 404
- US-A- 5 127 140

## Beschreibung

Die vorliegende Erfindung betrifft eine Werkzeugmaschine, insbesondere Drehmaschine, mit einem Maschinengestell, einer auf einem ersten Trägerabschnitt des Maschinengestells angeordneten ersten Arbeitsspindel zur Aufnahme eines ersten Werkstücks, einer der ersten Arbeitsspindel zugewandten, auf einem zweiten Trägerabschnitt des Maschinengestells angeordneten zweiten Arbeitsspindel zur Aufnahme eines zweiten Werkstücks, wobei die Spindelachse der zweiten Arbeitsspindel parallel, insbesondere koaxial, zu der Spindelachse der ersten Arbeitsspindel ausgerichtet ist, und zumindest zwei verfahrbaren Werkzeugträgerschlitten, auf denen jeweils ein werkzeugtragender Werkzeugträger angeordnet ist.

### Hintergrund der Erfindung

Gattungsgemäße Werkzeugmaschinen umfassen ein Maschinengestell, an dem zumindest zwei zueinander zugewandte, drehbar gelagerte Arbeitsspindeln mit parallelen bzw. koaxialen Spindelachsen vorgesehen sind, wobei an den Arbeitsspindeln jeweils Werkstücke zur Bearbeitung an der Werkzeugmaschine aufgenommen werden können. Für die Bereitstellung der Werkzeuge zur Bearbeitung werden zumindest zwei Werkzeugträger vorgesehen, die auf an dem Maschinengestell angeordneten, verfahrbaren Werkzeugschlitten, insbesondere Kreuzschlitten, bereitgestellt sind und mittels einer oder mehrerer Linearachsen relativ zu den Arbeitsspindeln verfahren werden können (z.B. in X-, Y- oder Z-Richtung verfahrbar). Derartige gattungsgemäße Werkzeugmaschinen sind z.B. aus der DD 279 429 A1 oder auch der EP 0 999 002 A1 bekannt.

Generell besteht bei derartigen gattungsgemäßen Werkzeugmaschinen die Anforderung, die Werkzeugmaschine derart bereitzustellen, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger Bauweise der Werkzeugmaschine und mit für den Bearbeiter bzw. Bediener der Werkzeugmaschine möglichst gut einsehbarem Bearbeitungsraum.

Der Erfindung liegt somit die Aufgabe zugrunde, eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger Bauweise der Werkzeugmaschine und mit für den Bearbeiter bzw. Bediener der Werkzeugmaschine möglichst gut einsehbarem Bearbeitungsraum.

US 5,127,140 betrifft eine numerisch gesteuerte Drehmaschine mit zwei Spindeln und drei Werkzeughaltern, wobei zwei Spindelstöcke sich gegenüberliegend angeordnet sind, und wobei jeder der Werkzeughalter in zwei Richtungen verfahrbar ist.

EP 1897 640 A1 betrifft eine numerisch gesteuerte Drehmaschine mit zwei Spindeln und drei als Revolverkopf ausgebildeten Werkzeughaltern, wobei zwei Spindelstöcke sich gegenüberliegend angeordnet sind.

### Zusammenfassung der Erfindung

Zur Lösung der vorstehend genannten Aufgabe wird gemäß der vorliegenden Erfindung eine Werkzeugmaschine gemäß des unabhängigen Anspruchs 1 vorgeschlagen. Abhängige Ansprüche betreffen bevorzugte Ausgestaltungen der Werkzeugmaschine gemäß der vorliegenden Erfindung.

Erfindungsgemäß wird eine Werkzeugmaschine, insbesondere Drehmaschine, vorgeschlagen, die ein Maschinengestell mit einem eine erste Werkzeugträgerseite aufweisenden ersten Trägerabschnitt, einem eine zweite Werkzeugträgerseite aufweisenden zweiten Trägerabschnitt und einem zwischen dem ersten und dem zweiten Trägerabschnitt angeordneten Mittelabschnitt, der eine dritte Werkzeugträgerseite aufweist, umfasst. Die erste Werkzeugträgerseite des ersten Trägerabschnitts und die zweite Werkzeugträgerseite des zweiten Trägerabschnitts sind auf einer gleichen ersten Seite des Maschinengestells angeordnet, und die dritte Werkzeugträgerseite des Mittelabschnitts ist auf einer zweiten Seite des Maschinengestells angeordnet.

Weiterhin umfasst die Werkzeugmaschine erfindungsgemäß eine an dem ersten Trägerabschnitt angeordnete erste Arbeitsspindel zur Aufnahme eines ersten Werkstücks und eine der ersten Arbeitsspindel zugewandte, an dem zweiten Trägerabschnitt angeordnete zweite Arbeitsspindel zur Aufnahme eines zweiten Werkstücks. Hierbei ist die Spindelachse der zweiten Arbeitsspindel parallel, insbesondere koaxial, zu der Spindelachse der ersten Arbeitsspindel ausgerichtet.

Gemäß der vorliegenden Erfindung umfasst die Werkzeugmaschine weiterhin einen auf der ersten Werkzeugträgerseite des ersten Trägerabschnitts angeordneten ersten Werkzeugträgerschlitten, auf dem ein erster Werkzeugträger angeordnet ist, einen auf der zweiten Werkzeugträgerseite des zweiten Trägerabschnitts angeordneten zweiten Werkzeugträgerschlitten, auf dem ein zweiter Werkzeugträger angeordnet ist, und einen auf der dritten Werkzeugträgerseite des Mittelabschnitts angeordneten dritten Werkzeugträgerschlitten, auf dem ein dritter Werkzeugträger angeordnet ist.

Der dritte Werkzeugträgerschlitten ist in einer ersten Richtung quer, insbesondere senkrecht, zu den Spindelachsen der ersten und zweiten Arbeitsspindeln verfahrbar, und der dritte Werkzeugträger ist zwischen der ersten Arbeitsspindel und der zweiten Arbeitsspindel angeordnet.

Der Erfindung liegt hierbei somit die Idee zugrunde, eine Geometrie eines Maschinengestells der Werkzeugmaschine derart vorteilhaft auszubilden, dass eine Mehrzahl von Werkzeugschlitten mit Werkzeugträgern und zwei koaxial, insbesondere parallel, angeordnete Arbeitsspindeln kompakt angeordnet werden können, indem ein erster Trägerabschnitt des Maschinengestells sowohl einen einen ersten Werkzeugträger tragenden ersten Werkzeugschlitten als auch eine erste Arbeitsspindel trägt, ein zweiter Trägerabschnitt des Maschinengestells sowohl einen einen zweiten Werkzeugträger tragenden zweiten Werkzeugschlitten als auch eine zweite Arbeitsspindel trägt, und ein einen dritten Werkzeugträger tragenden dritter Werkzeugschlitten an einem zwischen dem ersten und dem zweiten Trägerabschnitt angeordneten dritten Trägerabschnitt des Maschinengestells angeordnet ist, derart, dass der dritte Werkzeugträger zwischen den Arbeitsspindeln angeordnet ist.

Die erfindungsgemäße Werkzeugmaschine erlaubt folglich eine effiziente Bearbeitung der Werkstücke mit möglichst vielen, möglichst gleichzeitig einsetzbaren Werkzeugen, da auf kompakte Weise drei Werkzeugträger zur Bearbeitung der Werkstücke an den Arbeitsspindeln zur Verfügung stehen, wobei durch drei separat steuerbare Werkzeugschlitten eine äußerst hohe Flexibilität bezüglich der Steuerung der relativen Bewegungen zwischen den Werkzeugen und den in den Arbeitsspindeln aufgenommenen Werkzeugen ermöglicht wird. Zudem kann eine äußerst kompakte und kostengünstige Bauweise der Werkzeugmaschine bereitgestellt werden mit für den Bearbeiter bzw. Bediener der Werkzeugmaschine sehr gut einsehbarem Bearbeitungsraum.

Vorzugsweise ist die erste und/oder zweite Arbeitsspindel in Richtung der Spindelachsen verfahrbar. Dies ermöglicht es vorteilhaft, dass Werkstücke von einer zur anderen Spindel übergeben werden können, z.B. bei Hintereinanderausführung von Front- und Rückseitenbearbeitung desselben Werkstücks an den beiden Arbeitsspindeln.

Erfindungsgemäß spannen die erste Werkzeugträgerseite des ersten Trägerabschnitts und die zweite Werkzeugträgerseite des zweiten Trägerabschnitts im Wesentlichen eine erste Ebene auf und die dritte Werkzeugträgerseite des Mittelabschnitts spannt im Wesentlichen eine zur ersten Ebene schräg ausgerichtete zweite Ebene auf. Somit kann eine besonders zweckmäßige Bauweise des Maschinengestells bereitgestellt werden mit zwei senkrecht oder schräg zueinander stehenden Ebenen, bei der jede der Ebenen als Werkzeugträgerseite genutzt werden kann, um Werkzeugträger tragende Werkzeugschlitten anzuordnen. Hierbei kann zum Beispiel die Seite des Maschinengestells der einen Ebene an den ersten und zweiten Trägerabschnitten gegebenenfalls als Spindelträgerseite genutzt werden und die Seite des Maschinengestells der anderen Ebene an den ersten und zweiten Trägerabschnitten kann als Werkzeugträgerseite für den ersten und/oder dritten Werkzeugträgerschlitten genutzt werden. Es ist nicht notwendigerweise erforderlich, dass der Grundkörper des Maschinengestells genau ebenflächige Seiten aufweist, die die genannten Ebenen aufspannen. Vielmehr können die vorstehend genannten Ebenen abstrakter verstanden werden als geometrische Ebenen, die im Wesentlichen den Seiten des Maschinengestells entsprechen bzw. im Wesentlichen von den jeweiligen Seiten des Maschinengestells aufgespannt werden, oder die zumindest in denen die Verfahrebenen der Schlitten liegen, die z.B. durch Führungsschienen der Schlitten ausgebildet bzw. aufgespannt werden.

Gemäß einer besonders zweckmäßigen Ausgestaltung ist die zweite Ebene relativ zu auf der zweiten Seite des Maschinengestells angeordneten Seiten des ersten und zweiten Trägerabschnitts zum Maschinengestell hin eingerückt. Somit kann auf besonders zweckmäßige und kompakte Weise eine Maschinengestellkonstruktion bzw. ein Maschinengestellaufbau bereitgestellt werden, bei der der dritte Werkzeugschlitten für den dritten Werkzeugträger kompakt in einer Vertiefung zwischen den Arbeitsspindeln bzw. zwischen den Trägerabschnitten des Maschinengestells angeordnet werden kann. Zudem kann zwischen den Trägerabschnitten auf einfache und kompakte Weise ein gut einsehbarer, in Einsehrichtung geöffneter bzw. einseitig geöffneter Bearbeitungsraum geschaffen werden. Dieser Bearbeitungsraum kann besonders vorteilhaft zu drei Seiten jeweils von Seiten des ersten, mittleren und zweiten Trägerabschnitts begrenzt werden. Bei vertikaler Ausrichtung der Trägerabschnitte, bei der die Spindelachsen horizontal ausgerichtet sind und die erste Richtung im Wesentlichen vertikal zwischen den Trägerabschnitten verläuft, kann weiterhin bei dieser Bauweise eine besonders zweckmäßige Fallschneise für Späne unterhalb der Arbeitsspindeln und der Werkzeugträger geschaffen werden. Vorzugsweise bilden hierbei eine dem zweiten Trägerabschnitt zugewandte Seite des ersten Trägerabschnitts, die dritte Werkzeugträgerseite des Mittelabschnitts und eine dem ersten Trägerabschnitt zugewandte Seite des zweiten Trägerabschnitts den Bearbeitungsraum im Maschinengestell aus. Somit kann zwischen den Trägerabschnitten auf einfache und kompakte Weise ein gut einsehbarer, in Einsehrichtung geöffneter bzw. einseitig geöffneter Bearbeitungsraum geschaffen werden.

In einem bevorzugten Ausführungsbeispiel ist die erste Arbeitsspindel auf der ersten Werkzeugträgerseite des ersten Trägerabschnitts angeordnet und/oder die zweite Arbeitsspindel ist auf der zweiten Werkzeugträgerseite des ersten Trägerabschnitts angeordnet. Gemäß einem alternativen bevorzugten Ausführungsbeispiel ist die erste Arbeitsspindel auf einer ersten Spindelträgerseite des ersten Trägerabschnitts angeordnet und/oder die zweite Arbeitsspindel ist auf einer zweiten Spindelträgerseite des zweiten Trägerabschnitts angeordnet. Gemäß diesem alternativen bevorzugten Ausführungsbeispiel können die erste Spindelträgerseite und die zweite Spindelträgerseite vorzugsweise auf der gleichen zweiten Seite des Maschinengestells angeordnet werden, wie die dritte Werkzeugträgerseite.

Vorzugsweise spannen die erste Spindelträgerseite des ersten Trägerabschnitts und die zweite Spindelträgerseite des zweiten Trägerabschnitts in diesem Ausführungsbeispiel im Wesentlichen eine dritte Ebene auf, derart, dass die erste Ebene im Wesentlichen senkrecht oder schräg zur dritten Ebene ausgerichtet ist. In diesem Fall ist es dann zweckmäßig, eine Maschinengestellbauweise bereitzustellen, bei der die zweite Ebene im Wesentlichen parallel zu der dritten Ebene ausgerichtet ist, wobei die zweite Ebene relativ zur dritten Ebene zum Maschinengestell hin eingerückt ist. Somit kann auf besonders zweckmäßige und kompakte Weise eine Maschinengestellkonstruktion bzw. ein Maschinengestellaufbau bereitgestellt werden, bei der der dritte Werkzeugschlitten für den dritten Werkzeugträger kompakt in einer Vertiefung bzw. Einbuchtung (die ggf. wie vorstehend beschrieben vorteilhaft einen Bearbeitungsraum im Maschinengestell definieren kann) zwischen den Arbeitsspindeln bzw. zwischen den Trägerabschnitten des Maschinengestells angeordnet werden kann.

Zudem kann zwischen den Trägerabschnitten auf einfache und kompakte Weise ein gut einsehbarer, in Einsehrichtung geöffneter bzw. einseitig geöffneter Bearbeitungsraum geschaffen werden. Bei vertikaler Ausrichtung der Trägerabschnitte, bei der die Spindelachsen horizontal ausgerichtet sind und die erste Richtung im Wesentlichen vertikal zwischen den Trägerabschnitten verläuft, kann weiterhin bei dieser Bauweise eine besonders zweckmäßige Fallschneise für Späne unterhalb der Arbeitsspindeln und der Werkzeugträger geschaffen werden.

In weiteren zweckmäßigen Ausführungsbeispielen der vorliegenden Erfindung wird der dritte Werkzeugträgerschlitten auf Führungen, insbesondere Führungsschienen, geführt, die auf der dritten Werkzeugträgerseite des Mittelabschnitts des Maschinengestells angeordnet oder befestigt sind und in der ersten Richtung ausgerichtet sind.

Vorzugsweise ist der erste und/oder zweite Werkzeugträgerschlitten parallel oder quer, insbesondere senkrecht, zu den Spindelachsen verfahrbar. Somit können die relativen steuerbaren Bewegungsmöglichkeiten zwischen Werkzeugen und Werkstücken weiter verbessert werden. Der erste und/oder der zweite Werkzeugträgerschlitten kann hierbei vorzugsweise als Kreuzschlitten mit zwei Teilschlitten bzw. Doppel-Kreuzschlitten mit drei Teilschlitten ausgebildet sein.

Vorzugsweise ist der erste und/oder zweite Werkzeugträger in der ersten Richtung quer zu den Spindelachsen verfahrbar, in einer zweiten Richtung quer zu der ersten Richtung und quer zu den Spindelachsen verfahrbar und/oder in einer dritten Richtung parallel zu den Spindelachsen verfahrbar. Somit können die relativen steuerbaren Bewegungsmöglichkeiten zwischen Werkzeugen und Werkstücken noch weiter verbessert werden. Der erste und/oder der zweite Werkzeugträgerschlitten kann hierbei vorzugsweise als Kreuzschlitten mit zwei Teilschlitten bzw. Doppel-Kreuzschlitten mit drei Teilschlitten ausgebildet sein.

Vorzugsweise ist der erste und/oder zweite Werkzeugträger als Werkzeugrevolver ausgebildet, der einen um eine parallel zu den Spindelachsen ausgerichtete Revolverachse drehbar gelagerten, werkzeugtragenden Revolverkopf umfasst. Alternativ oder zusätzlich umfasst der dritte Werkzeugträger vorzugsweise zumindest einen Werkzeugrevolver. Da jeder Revolver dazu eingerichtet ist, eine Mehrzahl von Werkzeugen bereitzustellen, kann die Werkzeugbereitstellung an der Werkzeugmaschine hierdurch noch weiter verbessert werden.

Vorzugsweise sind der erste und zweite Werkzeugträger im Wesentlichen auf einer gleichen Seite der Spindelachsen angeordnet. Somit kann die Bauweise der Werkzeugmaschine weiterhin vorteilhaft noch kompakter bereitgestellt werden.

### Kurzbeschreibung der Figuren

**Fig.1** zeigt beispielhaft eine schematische Darstellung einer Perspektivansicht des Maschinengestellaufbaus einer Werkzeugmaschine gemäß einem bevorzugten Ausführungsbeispiel der vorliegenden Erfindung.
**Fig. 2** zeigt beispielhaft eine schematische Darstellung einer Vorderansicht einer Werkzeugmaschine gemäß einer ersten bevorzugten Ausführungsform der vorliegenden Erfindung.
**Fig. 3** zeigt beispielhaft eine schematische Darstellung einer Draufsicht der Werkzeugmaschine gemäß der ersten bevorzugten Ausführungsform der vorliegenden Erfindung aus **Fig. 2****.**
**Fig. 4** zeigt beispielhaft eine schematische Darstellung einer Detailansicht des Bearbeitungsraums der Werkzeugmaschine gemäß der ersten bevorzugten Ausführungsform der vorliegenden Erfindung aus **Fig. 2****.**
**Fig. 5** zeigt beispielhaft eine weitere schematische Darstellung einer Detailansicht des Bearbeitungsraums der Werkzeugmaschine gemäß der ersten bevorzugten Ausführungsform der vorliegenden Erfindung aus **Fig. 2****.**
**Figs. 6A** bis **6E** zeigen beispielhaft weitere schematische Darstellungen einer Detailansicht des Bearbeitungsraums der Werkzeugmaschine gemäß der ersten bevorzugten Ausführungsform der vorliegenden Erfindung aus **Fig. 2** zur Visualisierung der Orientierbarkeit des dritten Werkzeugträgers.
**Fig. 7** zeigt beispielhaft eine weitere schematische Darstellung einer Detailansicht des Bearbeitungsraums der Werkzeugmaschine gemäß der ersten bevorzugten Ausführungsform der vorliegenden Erfindung aus **Fig. 2** im Zusammenhang mit einer Reitstock-Anwendung.
**Fig. 8** zeigt beispielhaft eine schematische Darstellung einer Vorderansicht einer Werkzeugmaschine gemäß einer zweiten bevorzugten Ausführungsform der vorliegenden Erfindung.
**Fig. 9** zeigt beispielhaft eine schematische Darstellung einer Draufsicht der Werkzeugmaschine gemäß der zweiten bevorzugten Ausführungsform der vorliegenden Erfindung aus **Fig. 8****.**
**Fig. 10** zeigt beispielhaft eine schematische Darstellung einer Detailansicht des Bearbeitungsraums der Werkzeugmaschine gemäß der zweiten bevorzugten Ausführungsform der vorliegenden Erfindung aus **Fig. 8****.**

### Ausführliche Beschreibung bevorzugter Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

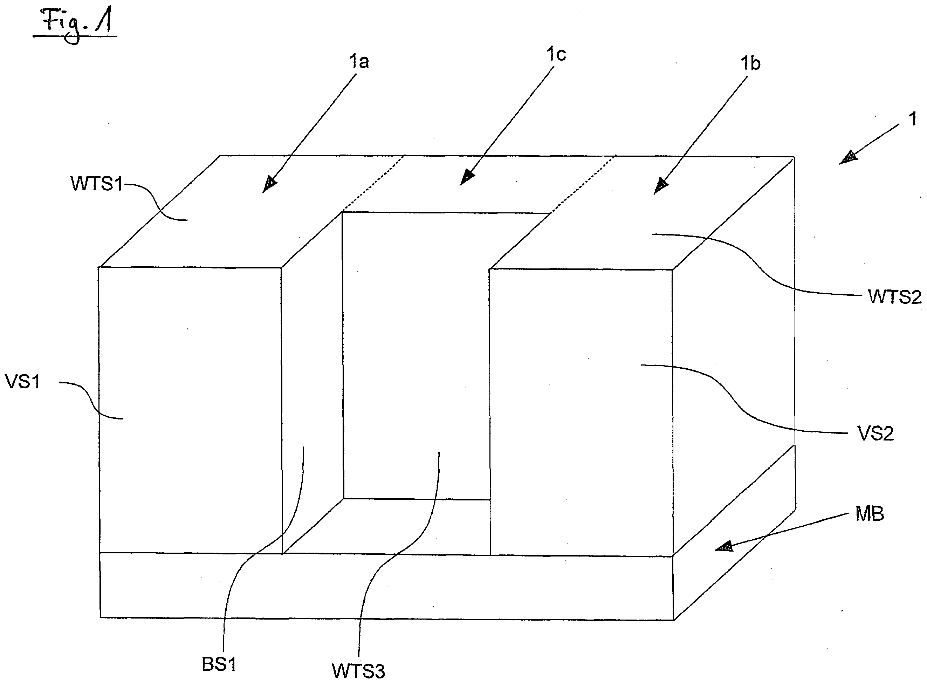

Fig. 1 zeigt beispielhaft eine schematische Darstellung einer Perspektivansicht des Maschinengestellaufbaus der Werkzeugmaschine gemäß einem bevorzugten Ausführungsbeispiel der vorliegenden Erfindung. Wie in Fig. 1 gezeigt, weist der erste Trägerabschnitt 1a beispielhaft eine erste Vorderseite VS1 und eine erste Werkzeugträgerseite WTS1 auf, die im Wesentlichen in senkrecht zueinander stehenden Ebenen liegen. Der zweite Trägerabschnitt 1b weist analog zu dem ersten Trägerabschnitt 1a beispielhaft eine zweite Vorderseite VS2 und eine zweite Werkzeugträgerseite WTS2 auf, die im Wesentlichen in senkrecht zueinander stehenden Ebenen liegen.

Gemäß Fig. 1 spannen die erste Werkzeugträgerseite WTS1 des ersten Trägerabschnitts 1a und die zweite Werkzeugträgerseite WTS2 des zweiten Trägerabschnitts 1b im Wesentlichen eine erste Ebene auf, und die erste Vorderseite VS1 des ersten Trägerabschnitts 1a und die zweite Vorderseite VS2 des zweiten Trägerabschnitts 1b spannen im Wesentlichen eine zweite Ebene auf, wobei die erste Ebene beispielhaft im Wesentlichen senkrecht zur zweiten Ebene ausgerichtet ist. Die erste Ebene kann in anderen Ausführungsformen auch schräg zur zweiten Ebene ausgerichtet sein.

Gemäß der Ausführung nach **Fig. 1** sind die erste Werkzeugträgerseite WTS1 des ersten Trägerabschnitts 1a und die zweite Werkzeugträgerseite WTS2 des zweiten Trägerabschnitts 1b auf der oberen Seite des Maschinengestells 1 angeordnet, und die erste Vorderseite VS1 des ersten Trägerabschnitts 1a und die zweite Vorderträgerseite VS2 des zweiten Trägerabschnitts 1b sind auf der vorderen Seite des Maschinengestells 1 angeordnet. Auf der unteren Seite weist das Maschinengestell einen Maschinenbasisabschnitt MB auf, der eine Stellfläche für die Werkzeugmaschine aufweist. In anderen Ausführungen kann das Maschinengestell auch anders orientiert sein, z.B. derart, dass die Werkzeugträgerseiten WTS1 und WTS2 auf der Vorder- oder Rückseite des Gestells 1 angeordnet sind.

Der zwischen den Trägerabschnitten 1a und 1b angeordnete Mittelabschnitt 1c des Maschinengestells 1 weist eine dritte Werkzeugträgerseite WTS3 auf. Die dritte Werkzeugträgerseite WTS3 des Mittelabschnitts 1c spannt im Wesentlichen eine zur zweiten Ebene der ersten und zweiten Vorderseiten VS1 und VS2 parallel ausgerichtete dritte Ebene auf, wobei die dritte Ebene relativ zur zweiten Ebene der ersten und zweiten Vorderseiten VS1 und VS2 zum Maschinengestell 1 hin eingerückt ist, d.h. zum Maschinengestell 1 hin insbesondere parallelverschoben ist.

Die erste Werkzeugträgerseite WTS1 des ersten Trägerabschnitts 1a und die zweite Werkzeugträgerseite WTS2 des zweiten Trägerabschnitts 1b sind beispielhaft auf der oberen Seite des Maschinengestells 1 angeordnet, und die erste Vorderseite VS1 des ersten Trägerabschnitts 1a, die zweite Vorderseite VS2 des zweiten Trägerabschnitts 1b und die dritte Werkzeugträgerseite WTS3 des Mittelabschnitts 1c sind beispielhaft auf der vorderen Seite des Maschinengestells 1 angeordnet, von der der Bearbeiter in den Bearbeitungsraum einsieht. Der Bearbeitungsraum wird dadurch definiert, dass der mittlere Trägerabschnitt 1c zwischen den ersten und zweiten Trägerabschnitten 1a und 1b zum Maschinengestell 1 hin eingerückt ist, derart dass ein nach vorne (in Richtung quer zur zweiten Ebene) geöffneter Bearbeitungsraum geschaffen wird.

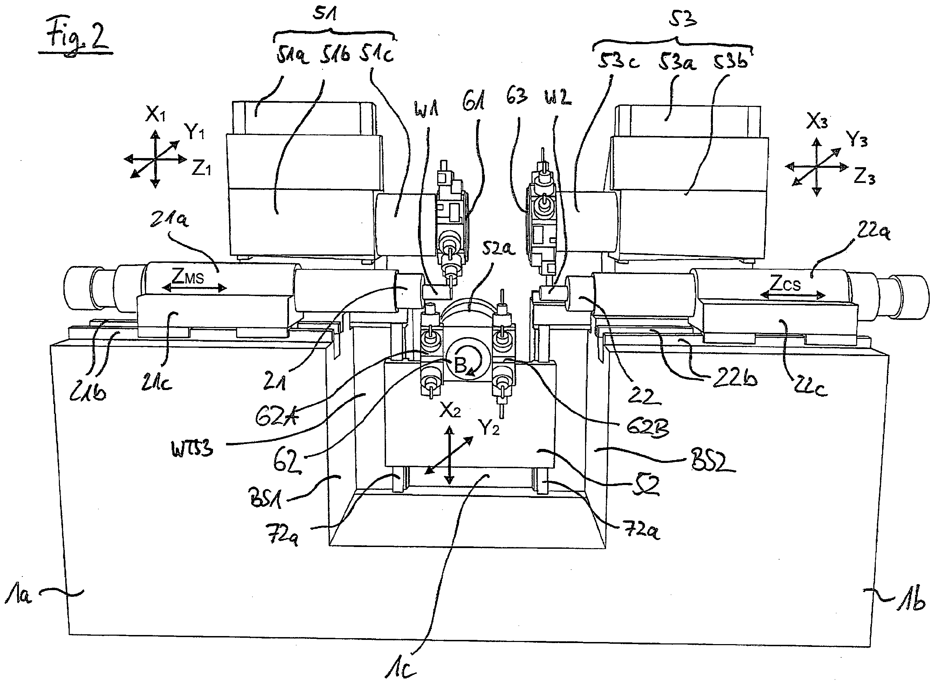

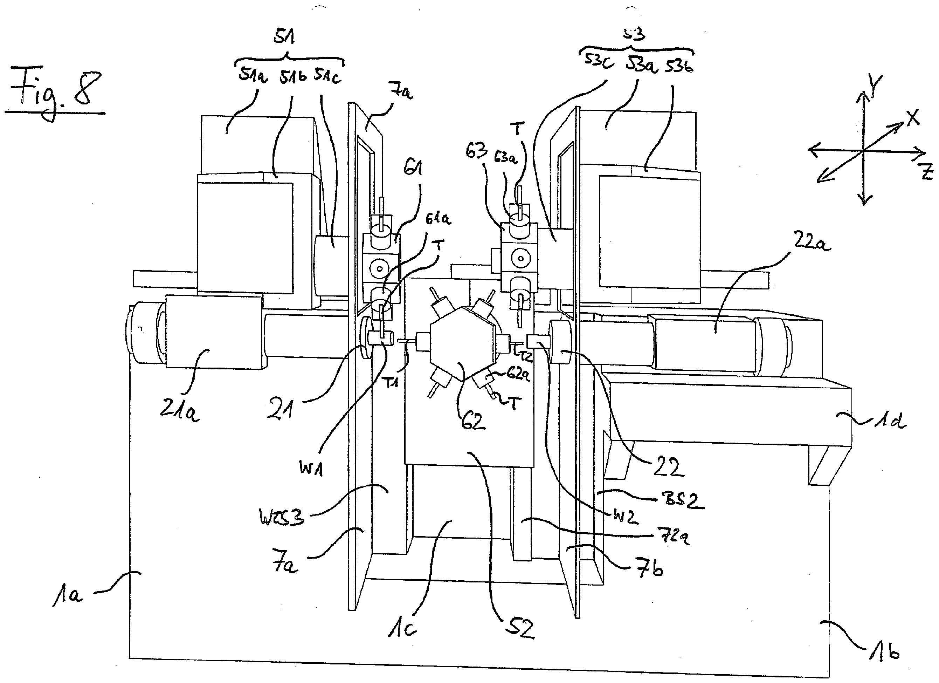

Zwischen den ersten und zweiten Vorderseiten VS1 und VS2 der Trägerabschnitte 1a und 1b und der dritten Werkzeugträgerseite WTS3 des Mittelabschnitts 1c erstrecken sich jeweilige Bearbeitungsraumseiten BS1 und BS2 (siehe z.B. Seite BS1 in **Fig. 1****;** siehe auch **Fig. 2**), die beispielhaft senkrecht zur der ersten Ebene der ersten und zweiten Werkzeugträgerseiten WTS1 und WTS2 der Trägerabschnitte 1a und 1b und quer, insbesondere senkrecht, zu der zweiten Ebene der ersten und zweiten Vorderseiten VS1 und VS2 der Trägerabschnitte 1a und 1b ausgerichtet sind. Die Bearbeitungsraumseiten definieren zusammen mit der dritten Werkzeugträgerseite WTS3 eine Einbuchtung im Maschinengestell 1, die vorteilhaft den Bearbeitungsraum an der Werkzeugmaschine definieren kann bzw. zudem bei vertikaler Ausrichtung wie in **Fig. 1** eine Fallschneise für Späne (siehe die Ausführungen gemäß **Fig. 2** bzw. **Fig. 8**).

In diesem Ausführungsbeispiel gemäß **Fig. 1** sind die Trägerabschnitte 1a bis 1c miteinander verbunden, können jedoch in anderen Ausführungsbeispielen der Erfindung auch getrennt voneinander bereitgestellt werden.

### Erstes Ausführungsbeispiel

**Fig. 2** zeigt beispielhaft eine schematische Darstellung einer Vorderansicht einer Werkzeugmaschine gemäß einem ersten Ausführungsbeispiel der vorliegenden Erfindung. Die Werkzeugmaschine gemäß **Fig. 1** ist eine Drehmaschine mit einem Maschinengestell 1, das einen ersten Trägerabschnitt 1a, einen zweiten Trägerabschnitt 1b und einen zwischen dem ersten und dem zweiten Trägerabschnitt 1a und 1b angeordneten Mittelabschnitt 1c aufweist, wie in **Fig. 1** schematisch dargestellt. Gemäß diesem Ausführungsbeispiel sind die Spindeln 21 und 22 beispielhaft jeweils an den Werkzeugschlittenseiten WTS1 und WTS2 des ersten und zweiten Trägerabschnitts 1a und 1b angeordnet. Die Spindeln 21 und 22 können in weiteren Ausführungsbeispielen jedoch auch auf den Vorderseiten VS1 und VS2 angeordnet sein.

Die Werkzeugmaschine gemäß **Fig. 2** umfasst eine auf der ersten Werkzeugschlittenseite WTS1 des ersten Trägerabschnitts 1a angeordnete, an einem Spindelgehäuse 21a gehaltene erste Arbeitsspindel 21 zur Aufnahme eines ersten Werkstücks W1 und eine der ersten Arbeitsspindel 21 zugewandte, auf der zweiten Werkzeugschlittenseite WTS2 des zweiten Trägerabschnitts 1b angeordnete zweite Arbeitsspindel 22 zur Aufnahme eines zweiten Werkstücks W2. Die zweite Arbeitsspindel 22 wird an einem Spindelgehäuse 22a gehalten.

Die Spindelachse der zweiten Arbeitsspindel 22 ist in diesem Ausführungsbeispiel koaxial zu der Spindelachse der ersten Arbeitsspindel 21 ausgerichtet, kann jedoch auch parallel, jedoch nicht koaxial ausgerichtet sein, oder parallel ausgerichtet sein und durch Verfahren koaxial ausrichtbar sein.

In diesem Ausführungsbeispiel ist die erste Arbeitsspindel 21 im Spindelgehäuse 21a auf einem auf Führungen 21b geführten Spindelschlitten 21c angeordnet und in Richtung Z (Z_{MS}, MS für "Main Spindle" bzw. Hauptspindel) parallel zu den Spindelachsen verfahrbar und auch die zweite Arbeitsspindel 22, die im Spindelgehäuse 22a auf einem von Führungen 22b geführten Spindelschlitten 22c geführt wird, ist in Richtung Z (Zcs, CS für "Counter Spindle" bzw. Gegenspindel) parallel zu den Spindelachsen verfahrbar. In weiteren Ausführungsbeispielen kann auch nur die erste oder die zweite Arbeitsspindel in Z-Richtung verfahrbar sein.

Die Führungen 21b bzw. 22b verlaufen in diesem Ausführungsbeispiel beispielhaft an der ersten Werkzeugschlittenseite WTS1 des ersten Trägerabschnitts 1a bzw. an der zweiten Werkzeugschlittenseite WTS2 des zweiten Trägerabschnitts 1b, können jedoch alternativ auch auf den Vorderseiten VS1 bzw. VS2 oder an Vorsprungabschnitten des Maschinengestells 1 angeordnet sein, die an den Vorderseiten VS1 bzw. VS2 angeordnet sein können.

Die Werkzeugmaschine umfasst weiterhin einen auf der ersten Werkzeugträgerseite WTS1 des ersten Trägerabschnitts 1a angeordneten ersten Werkzeugträgerschlitten 51, auf dem ein erster Werkzeugträger 61 angeordnet ist, und einen auf der zweiten Werkzeugträgerseite WTS2 des zweiten Trägerabschnitts 1b angeordneten zweiten Werkzeugträgerschlitten 53, auf dem ein zweiter Werkzeugträger 63 angeordnet ist.

Der erste und der zweite Werkzeugträger 61 und 63 sind in diesem Ausführungsbeispiel als Werkzeugrevolver ausgebildet, die jeweils einen um eine parallel zu den Spindelachsen ausgerichtete Revolverachse drehbar gelagerten, werkzeugtragenden Revolverkopf umfassen. Anstelle eines Werkzeugrevolvers ist es jedoch auch möglich, z.B. eine Fräs-/Bohrspindel mit einer Werkzeugaufnahme für den ersten und/oder zweiten Werkzeugträger 61, 63 vorzusehen.

Erfindungsgemäß ist in dem Ausführungsbeispiel gemäß **Fig. 2** ein auf der dritten Werkzeugträgerseite WTS3 des Mittelabschnitts 1c angeordneter dritter Werkzeugträgerschlitten 52 vorgesehen, auf dem ein dritter Werkzeugträger 62 angeordnet ist. Der dritte Werkzeugträgerschlitten 52 ist in vertikaler Richtung X2 in **Fig. 2** und insbesondere senkrecht zu den Spindelachsen der ersten und zweiten Arbeitsspindeln 21 und 22 verfahrbar. Hierfür sind auf der dritten Werkzeugträgerseite WTS3 Führungen 72a angeordnet, die quer zu den Spindelachsen in vertikaler Richtung X2 ausgerichtet sind. Mittels einer Linearachse in einem Gehäuse 52a (zum Beispiel als Teleskopachse ausgebildet), die auf dem dritten Werkzeugträgerschlitten 52 angeordnet ist, ist der dritte Werkzeugträger 62 zudem in einer weiteren Richtung Y2 quer zu den Spindelachsen und quer zur Richtung X2 verfahrbar.

Insbesondere ist der dritte Werkzeugträger 62 derart ausgebildet, dass er zwei Werkzeugrevolver mit jeweiligen Revolverköpfen 62A und 62B umfasst, die zwischen der ersten Arbeitsspindel 21 und der zweiten Arbeitsspindel 22 angeordnet sind. Jeder der Revolverköpfe 62A und 62B ist an dem Werkzeugträger 62 um eine jeweilige Revolverachse drehbar gelagert. Die Revolverachsen der Revolverköpfe 62A und 62B sind in diesem Ausführurigsbeispiel beispielhaft koaxial ausgerichtet.

Weiterhin umfasst das Gehäuse 52a einen Drehachsantrieb einer Drehachse B, mittels der der dritte Werkzeugträger 62 rotierbar ist um eine Achse, die quer zu den Spindelachsen und parallel zu der Richtung Y2 bzw. quer zur Richtung X2 ausgerichtet ist. Die Revolverköpfe 62A und 62B sind hierbei derart angeordnet, dass die Revolverachsen quer zur Drehachse B ausgerichtet sind. Weiterhin sind die Revolverköpfe 62A und 62B auf jeweilig relativ zur Drehachse B gegenüberliegenden Seiten am dritten Werkzeugträger 62 angeordnet.

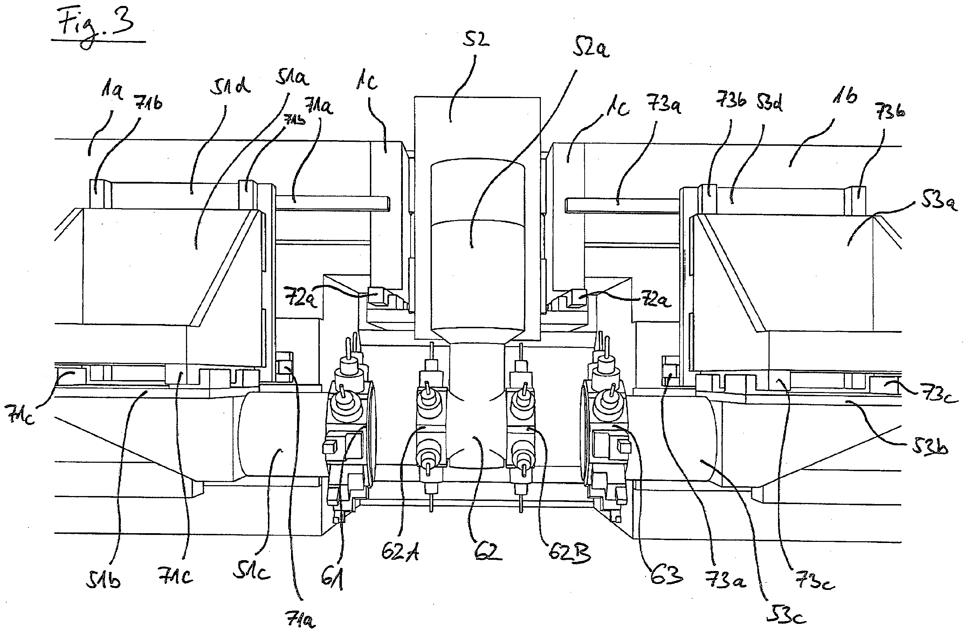

**Fig. 3** zeigt beispielhaft eine schematische Darstellung einer Draufsicht der Werkzeugmaschine gemäß der ersten bevorzugten Ausführungsform der vorliegenden Erfindung aus **Fig. 2****.** Hierbei ist insbesondere der Aufbau der Werkzeugträgerschlitten 51 und 52 dargestellt.

Der erste Werkzeugträgerschlitten 51 ist als Doppel-Kreuzschlitten ausgeführt umfassend drei Teilschlitten 51d, 51a und 51b, wobei der Teilschlitten 51d auf dem ersten Trägerabschnitt 1a des Maschinengestells 1 angeordnet ist und auf Führungen 71a geführt wird, die parallel zu den Spindelachsen auf der ersten Werkzeugträgerseite WTS1 des ersten Trägerabschnitts 1a angeordnet sind. Der Teilschlitten 51d ist somit in einer Richtung ZI (siehe auch **Fig**. **2**) verfahrbar. Auf dem Teilschlitten 51d sind Führungen 71b angeordnet, die quer zu den Spindelachsen verlaufen und auf denen der Teilschlitten 51a in Richtung Y1 (siehe auch **Fig. 2**) verfahrbar geführt wird. Auf dem Teilschlitten 51a sind Führungen 71c angeordnet, die quer zu den Spindelachsen und quer zur Richtung Y1 der Führungen 71b verlaufen und auf denen der Teilschlitten 51b in Richtung X1 (siehe auch **Fig. 2**) verfahrbar geführt wird. An dem Teilschlitten 51b ist schließlich ein Gehäuse 51c gehalten, dass sich parallel zu den Spindelachsen in den Bearbeitungsraum hinein erstreckt und an dessen Ende der erste Werkzeugträger 61 gehalten wird. Aufgrund dieser Bauweise kann der erste Werkzeugträger 61 in drei orthogonalen Richtungen X1, Y1 und Z1 verfahren werden.

Auch der zweite Werkzeugträgerschlitten 53 ist gemäß diesem Ausführungsbeispiel als Doppel-Kreuzschlitten ausgeführt umfassend drei Teilschlitten 53d, 53a und 53b, wobei der Teilschlitten 53d auf dem zweiten Trägerabschnitt 1b des Maschinengestells 1 angeordnet ist und auf Führungen 73a geführt wird, die parallel zu den Spindelachsen auf der zweiten Werkzeugträgerseite WTS2 des zweiten Trägerabschnitts 1b angeordnet sind. Der Teilschlitten 53d ist somit in einer Richtung Z3 (siehe auch **Fig. 2**) verfahrbar. Auf dem Teilschlitten 53d sind Führungen 73b angeordnet, die quer zu den Spindelachsen verlaufen und auf denen der Teilschlitten 53a in Richtung Y3 (siehe auch **Fig. 2**) verfahrbar geführt wird. Auf dem Teilschlitten 53a sind Führungen 73c angeordnet, die quer zu den Spindelachsen und quer zur Richtung Y3 der Führungen 73b verlaufen und auf denen der Teilschlitten 53b in Richtung X3 (siehe auch **Fig. 2**) verfahrbar geführt wird. An dem Teilschlitten 53b ist schließlich ein Gehäuse 53c gehalten, dass sich parallel zu den Spindelachsen in den Bearbeitungsraum hinein erstreckt und an dessen Ende der zweite Werkzeugträger 63 gehalten wird. Aufgrund dieser Bauweise kann der zweite Werkzeugträger 63 in drei orthogonalen Richtungen X3, Y3 und Z3 verfahren werden.

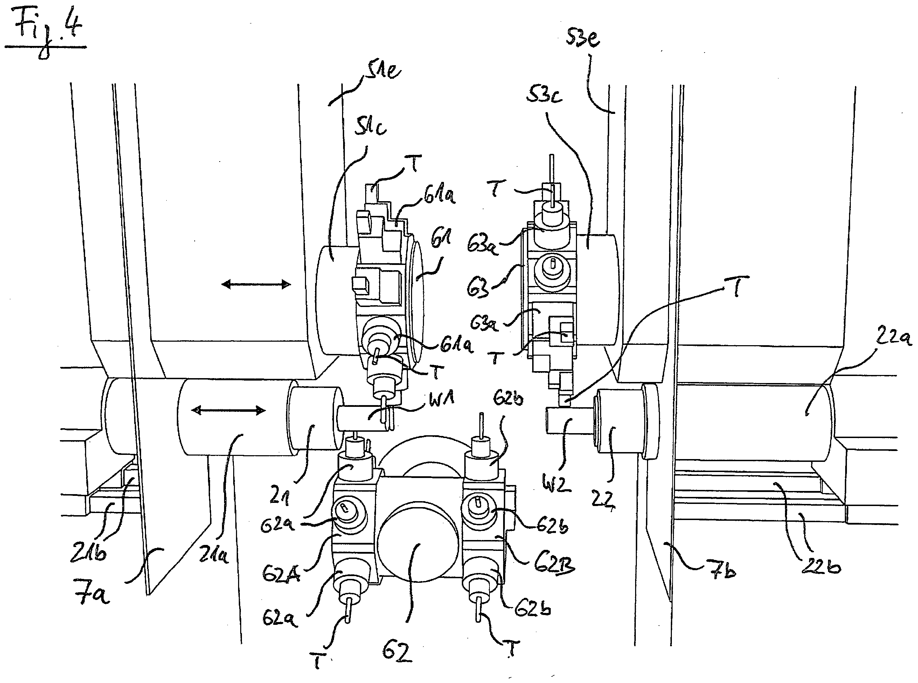

**Fig. 4** zeigt beispielhaft eine schematische Darstellung einer Detailansicht des Bearbeitungsraums der Werkzeugmaschine gemäß der ersten bevorzugten Ausführungsform der vorliegenden Erfindung aus **Figs. 2** und **3****.**

Wie bereits vorstehend beschrieben sind der erste und zweite Werkzeugträger in diesem Ausführungsbeispiel als Werkzeugrevolver mit jeweiligen Revolverköpfen 61 und 63 ausgebildet. Die Revolverköpfe 61 und 63 sind hierbei derart ausgerichtet, dass die Revolverachsen parallel zueinander und parallel zu den Spindelachsen ausgerichtet sind. Am Revolverkopf 61 des ersten Werkzeugträgers sind umfänglich um die Revolverachse eine Mehrzahl von Werkzeughaltern 61a angeordnet, die jeweils dazu eingerichtet sind, Werkzeuge T zur Bearbeitung eines Werkstücks zu halten. Durch Rotation des Revolverkopfs 61 um die Revolverachse können die jeweiligen Werkzeughalter 61a mit der ersten Arbeitsspindel 21 ausgerichtet werden, um ein in dieser gehaltenes Werkstück W1 zu bearbeiten. Ein Antrieb des Werkzeugrevolvers kann in dem Gehäuse 51c angeordnet sein. Analog sind am Revolverkopf 63 des zweiten Werkzeugträgers umfänglich um die Revolverachse eine Mehrzahl von Werkzeughaltern 63a angeordnet, die jeweils dazu eingerichtet sind, Werkzeuge T zur Bearbeitung eines Werkstücks zu halten. Durch Rotation des Revolverkopfs 63 um die Revolverachse können die jeweiligen Werkzeughalter 63a mit der zweiten Arbeitsspindel 22 ausgerichtet werden, um ein in dieser gehaltenes Werkstück W2 zu bearbeiten. Ein Antrieb des Werkzeugrevolvers kann in dem Gehäuse 53c angeordnet sein.

Am Revolverkopf 62A des dritten Werkzeugträgers 62 sind umfänglich um die Revolverachse eine Mehrzahl von Werkzeughaltern 62a angeordnet, die jeweils dazu eingerichtet sind, Werkzeuge T zur Bearbeitung eines Werkstücks zu halten. Durch Rotation des Revolverkopfs 62A um die Revolverachse können die jeweiligen Werkzeughalter 62a mit der ersten Arbeitsspindel 21 (oder auch mit der zweiten Arbeitsspindel 22) ausgerichtet werden, um ein in diesen gehaltenes Werkstück W1 oder W2 zu bearbeiten. In **Fig. 4** ist beispielhaft ein Werkzeug des Werkzeugrevolvers 62A mit der ersten Arbeitsspindel 21 ausgerichtet, so dass das in dieser gehaltene Werkstück W1 sowohl durch ein Werkzeug des Werkzeugrevolvers 62A als auch zeitgleich durch ein Werkzeug des Werkzeugrevolvers 61 bearbeitet werden kann. Zeitgleich kann ein an der zweiten Arbeitsspindel 22 gehaltenes Werkstück W2 mittels eines Werkzeugs des Werkzeugrevolvers 63 bearbeitet werden.

Am Revolverkopf 62B des dritten Werkzeugträgers 62 sind umfänglich um die Revolverachse eine Mehrzahl von Werkzeughaltern 62b angeordnet, die jeweils dazu eingerichtet sind, Werkzeuge T zur Bearbeitung eines Werkstücks zu halten. Durch Rotation des Revolverkopfs 62B um die Revolverachse können die jeweiligen Werkzeughalter 62b mit der zweiten Arbeitsspindel 22 (oder auch mit der ersten Arbeitsspindel 21) ausgerichtet werden, um ein in diesen gehaltenes Werkstück W2 oder W1 zu bearbeiten. Beispielsweise kann die zweite Arbeitsspindel 22 in **Fig. 4** zusammen mit dem Werkzeugträger 63 weiter in den Bearbeitungsraum verfahren werden, so dass mittels des Werkzeugträgers 62 zeitgleich das an der ersten Arbeitsspindel 21 gehaltene Werkstück W1 mit einem Werkzeug des Werkzeugrevolvers 62A als auch das an der zweiten Arbeitsspindel 22 gehaltene Werkstück W2 mit einem Werkzeug des Werkzeugrevolvers 62B bearbeitet werden können. Somit ist es vorteilhaft möglich sogar zwei Werkstücke W1 und W2 bei einer Bauweise mit nur drei kompakt angeordneten Werkzeugträgern 61, 62 und 63 auf nur drei kompakten Schlittensystemen 51, 52 und 53 gleichzeitig mit jeweils zwei Werkzeugen zu bearbeiten.

Hierfür ist dieses Ausführungsbeispiel auch gerade deshalb derart zweckmäßig und vorteilhaft, da pro Spindel ein jeweiliger doppelter Verfahrbarkeitsfreiheitsgrad parallel zu den Spindelachsen bereitgestellt wird. Speziell sind sowohl der erste Werkzeugträger 61 und die erste Arbeitsspindel 21 als auch der zweite Werkzeugträger 63 und die zweite Arbeitsspindel 22 jeweils unabhängig voneinander in Richtung parallel zu den Spindelachsen verfahrbar (siehe beispielhaft die beiden Pfeile in **Fig. 4** für Spindel 21 und Werkzeugträger 61, bzw. Richtungen Z_{MS} und ZI bzw. Zcs und Z3 in **Fig**. **2**). Somit kann die relative Position in Richtung der Spindelachsen zwischen Werkstück W1 an der ersten Arbeitsspindel 21 und einem Werkzeug am Revolver 62A des dritten Werkzeugträgers 62 mittels der Z_{MS}-Verfahrbarkeit der Spindel 21 gesteuert werden, wobei die relative Position in Richtung der Spindelachsen zwischen Werkstück W1 an der ersten Arbeitsspindel 21 und einem Werkzeug am ersten Werkzeugträger 61 mittels der Z1-Verfahrbarkeit des ersten Werkzeugträgers 61 gesteuert werden kann. Analog kann die relative Position in Richtung der Spindelachsen zwischen Werkstück W2 an der zweiten Arbeitsspindel 22 und einem Werkzeug am Revolver 62B des dritten Werkzeugträgers 62 mittels der Zcs-Verfahrbarkeit der Spindel 22 gesteuert werden, wobei die relative Position in Richtung der Spindelachsen zwischen Werkstück W2 an der zweiten Arbeitsspindel 22 und einem Werkzeug am zweiten Werkzeugträger 63 mittels der Z3-Verfahrbarkeit des zweiten Werkzeugträgers 63 gesteuert werden kann.

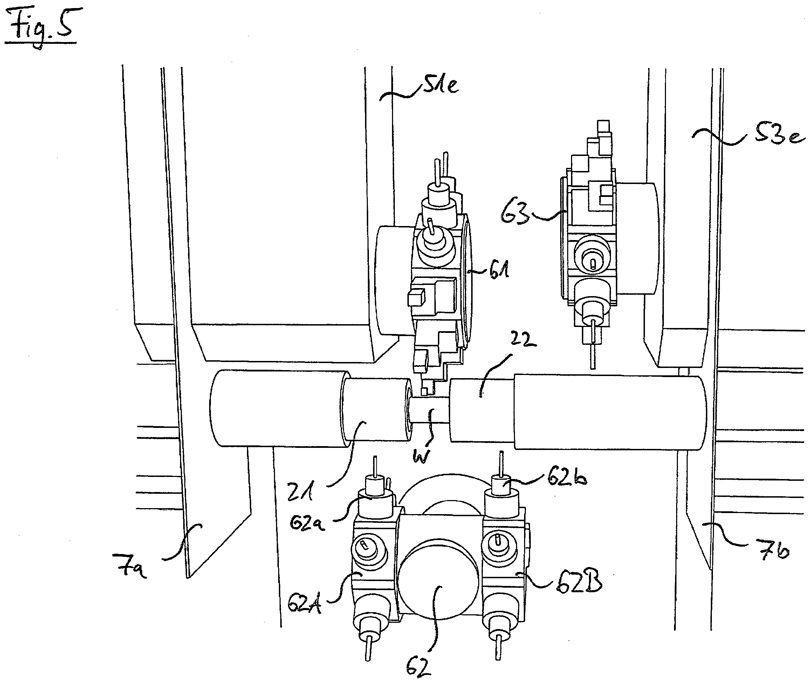

**Fig. 5** zeigt beispielhaft eine weitere schematische Darstellung einer Detailansicht des Bearbeitungsraums der Werkzeugmaschine gemäß der ersten bevorzugten Ausführungsform der vorliegenden Erfindung aus **Fig. 2****.** In dieser Darstellung ist ein Werkstück W gleichzeitig an beiden Arbeitsspindeln 21 und 22 aufgenommen und ein Werkzeug des ersten Werkzeugträgers 61 kann dazu verwendet werden, das Werkstück W in Werkstücke W1 bzw. W2 zu zerteilen, die dann jeweils an der ersten bzw. zweiten Arbeitsspindel 21 bzw. 22 aufgenommen sind und unabhängig voneinander bearbeitet werden können, z.B. gemäß der Konstellation aus **Fig.4****.** In Fig. 5 sind beispielhaft optionale zusätzliche Abdeckungen 51a und 53e gezeigt, die dazu verwendet werden können, die Werkzeugträgerschlitten 51 und 53 abzudecken und vor Spänen zu schützen.

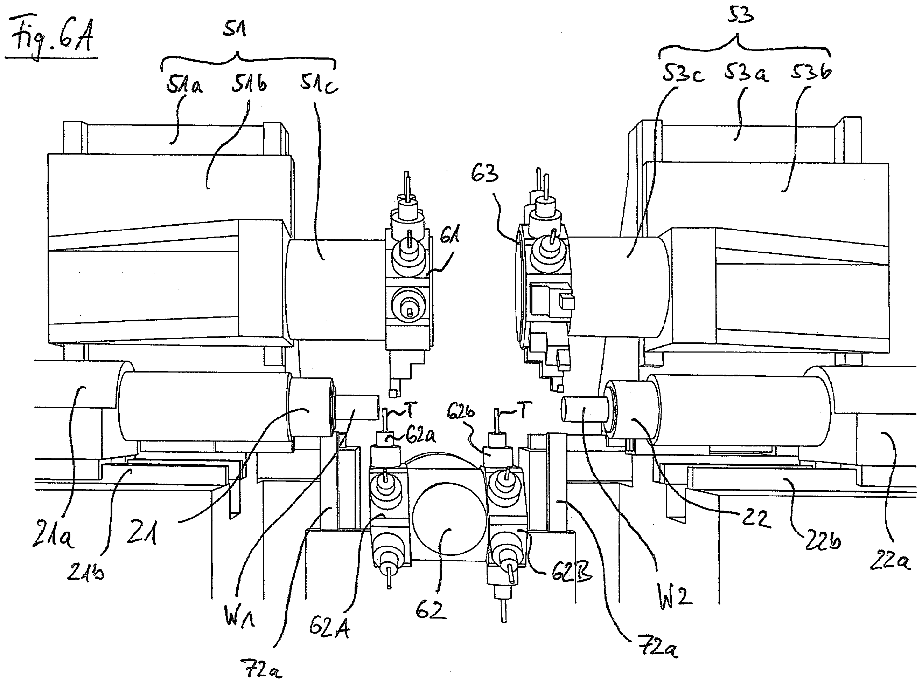

**Figs. 6A** bis **6D** zeigen beispielhaft weitere schematische Darstellungen einer Detailansicht des Bearbeitungsraums der Werkzeugmaschine gemäß der ersten bevorzugten Ausführungsform der vorliegenden Erfindung aus **Fig. 2** zur Visualisierung der Orientierbarkeit des dritten Werkzeugträgers 62.

Hierbei zeigt sich die besonders zweckmäßige Ausgestaltung des dritten Werkzeugträgers 62 in diesem Ausführungsbeispiel der vorliegenden Erfindung. Die Konstellation gemäß **Fig. 6A** entspricht hierbei im Wesentlichen der Konstellation gemäß **Fig. 4****.** Folglich können, wie vorstehend bereits beschrieben, beide Werkstücke W1 und W2 an den jeweiligen Arbeitsspindeln 21 und 22 jeweils mit zwei Werkzeugen des Werkzeugträgers 62, je durch ein Werkzeug des Revolvers 62A und ein Werkzeug des Revolvers 62B, gleichzeitig bearbeitet werden.

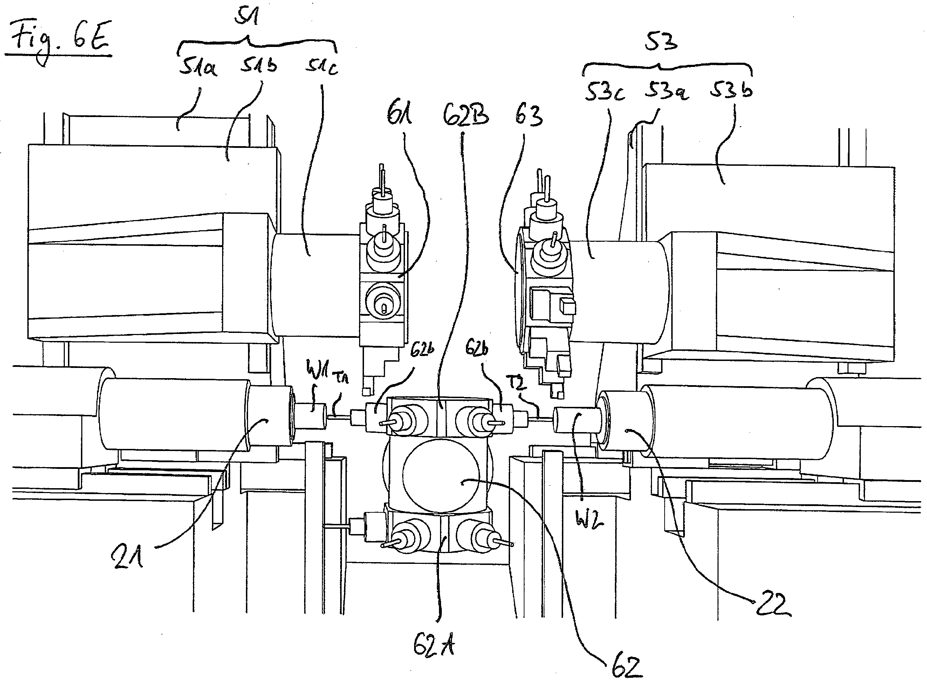

Aufgrund der vorteilhaften Ausgestaltung des Werkzeugträgers 62 mit zwei koaxial angeordneten Revolverköpfen 62A und 62B auf gegenüberliegenden Seiten der Drehachse B des Werkzeugträgers 62 kann die Revolverachse der Revolverköpfen 62A und 62B relativ zu der Ausrichtung der Spindelachsen rotiert werden, so dass von einer radialen Bearbeitung des Werkstücks W1 gemäß **Fig. 6A** mittels eines Werkzeugs T des Revolverkopfs 62A beinahe kontinuierlich in eine axiale Bearbeitung des Werkstücks W1 gemäß **Fig. 6E** mittels eines Werkzeugs T1 des Revolverkopfs 62B übergegangen werden kann.

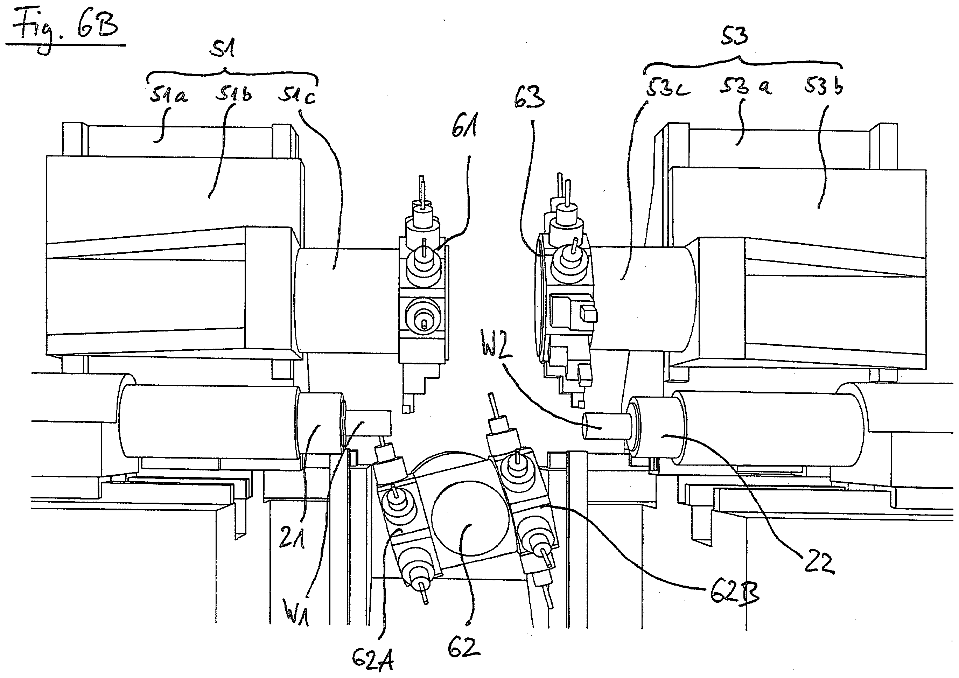

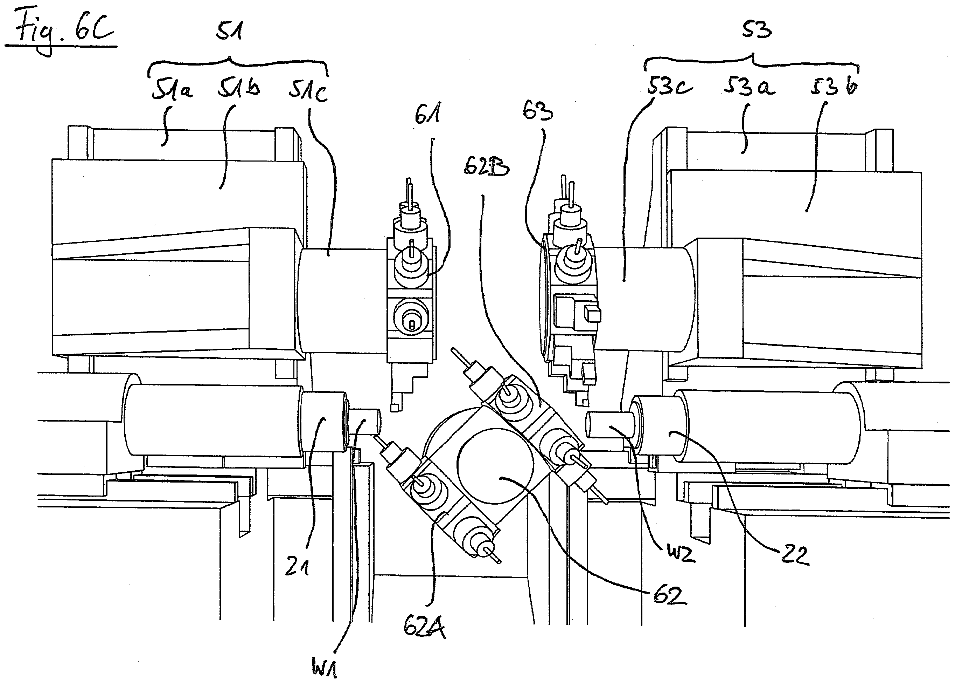

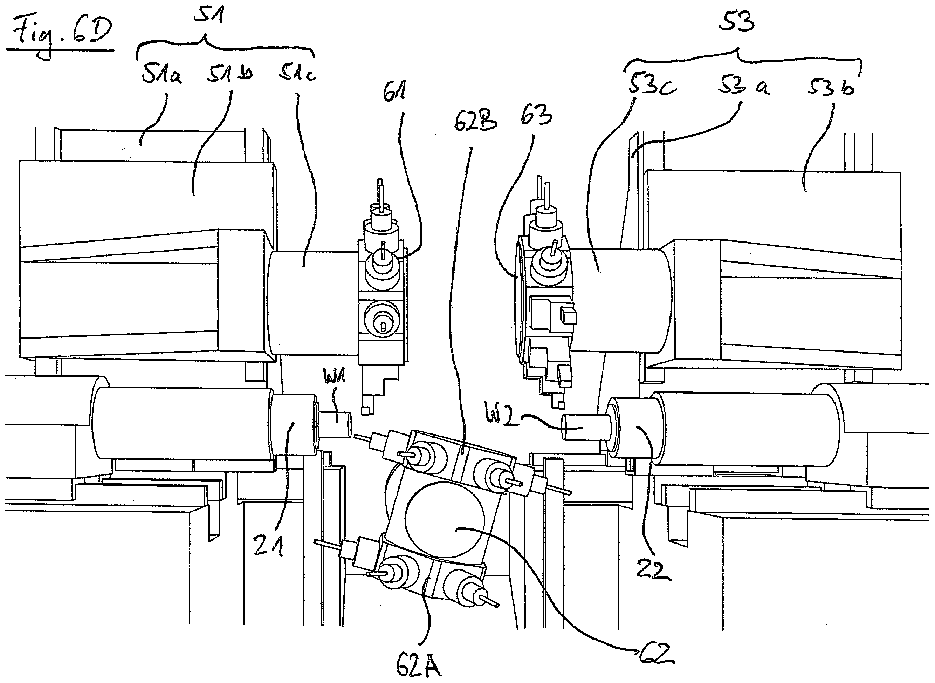

Hierbei ist die Orientierung der Revolverachsen der Revolver 62A und 62B zu den Spindelachsen beispielhaft in **Fig. 6A** 0°, in **Fig. 6B** 15°, in **Fig. 6C** 45°, in **Fig. 6D** 75° und schließlich in **Fig. 6E** 90°. Zwischen der Orientierung gemäß **Fig. 6C** und **Fig. 6D** wurde hierbei beispielhaft von einer Bearbeitung mit einem Werkzeug des Werkzeugrevolvers 62A auf eine Bearbeitung mit einem Werkzeug des Werkzeugrevolver 62B durch Verfahren des Werkzeugträgers in Richtung X2 nach unten umgeschaltet, um den Werkzeugträgern 61 und 63 mehr Raum zur Bearbeitung zu geben. Diese müssten sonst in Richtung X1 bzw. X3 nach oben verfahren werden und könnten nicht mehr an der Bearbeitung der Werkstücke W1 und W2 teilnehmen.

Weiterhin ist in **Fig. 6E** dargestellt, dass die Ausgestaltung des dritten Werkzeugträgers 62 gemäß der die Revolverachse des Werkstückrevolvers 62B (bzw. 62A) quer zu den Spindelachsen ausgerichtet werden kann, den weiteren Vorteil bietet, dass die an den beiden Arbeitsspindeln 21 und 22 gehaltenen Werkstücke W1 und W2 weiterhin auch in axialer Richtung gleichzeitig bearbeitet werden können durch Werkzeuge T1 und T2 des Revolvers 62B des dritten Werkzeugträgers 62 (ähnlich zu dem später beschriebenen zweiten Ausführungsbeispiel).

Gemäß dieses besonders zweckmäßigen Ausführungsbeispiels kann also gemäß Fig. 6A eine erste Konstellation bereitgestellt werden, bei der die Revolverachsen der Werkzeugrevolver 62A und 62B parallel zu den Spindelachsen der Arbeitsspindeln 21 und 22 ausgerichtet sind und das an der ersten Arbeitsspindel 21 aufgenommene Werkstück W1 mit einem Werkzeug des Werkzeugrevolvers 62A radial bearbeitet werden kann, während gleichzeitig das an der zweiten Arbeitsspindel 22 aufgenommene Werkstück W2 mit einem Werkzeug des Werkzeugrevolvers 62B radial bearbeitet werden kann, und weiterhin kann gemäß **Fig. 6E** eine zweite Konstellation bereitgestellt werden, bei der die Revolverachsen der Werkzeugrevolver 62A und 62B quer zu den Spindelachsen der Arbeitsspindeln 21 und 22 ausgerichtet sind und das an der ersten Arbeitsspindel 21 aufgenommene Werkstück W1 mit einem Werkzeug T1 des Werkzeugrevolvers 62B bearbeitet werden kann, während gleichzeitig das an der zweiten Arbeitsspindel 22 aufgenommene Werkstück W2 mit einem Werkzeug T2 des Werkzeugrevolvers 62B, welches am Werkzeugrevolver 62B auf einer dem Werkzeug T1 gegenüberliegenden Position angeordnet ist, bearbeitet werden kann.

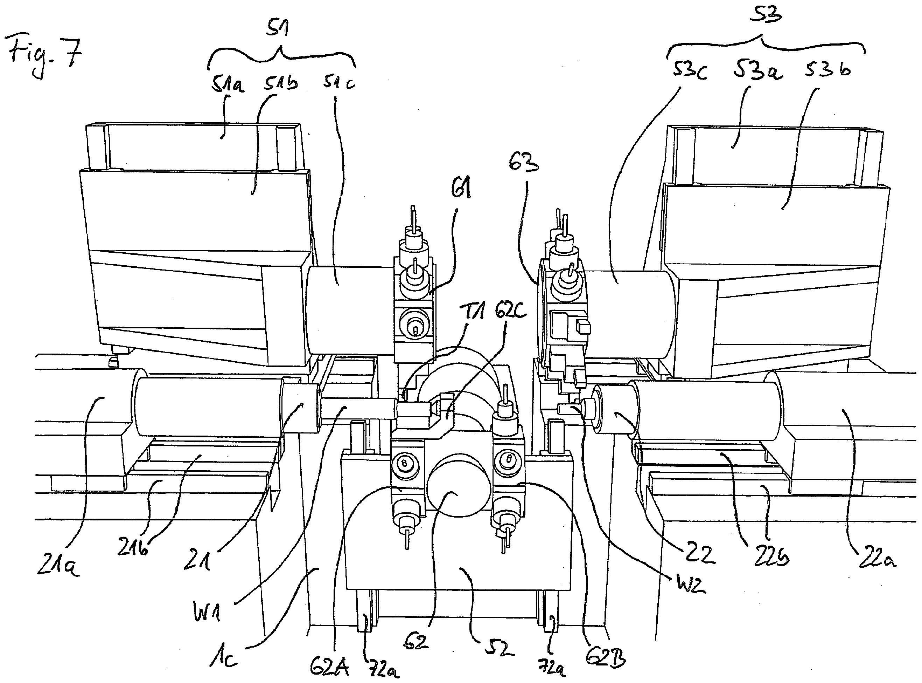

**Fig. 7** zeigt beispielhaft eine weitere schematische Darstellung einer Detailansicht des Bearbeitungsraums der Werkzeugmaschine gemäß der ersten bevorzugten Ausführungsform der vorliegenden Erfindung aus **Fig. 2** im Zusammenhang mit einer Reitstock-Anwendung.

Hierbei ist an einer Aufnahme des Werkzeugrevolvers 62A ein Reitstock 62C mit einer Zentrierspitze angeordnet, mittels der ein längliches Werkstück W1, das an der ersten Arbeitsspindel 21 aufgenommen ist, zentriert und gehalten wird, um nicht unter dem Druck, der durch das bearbeitende Werkzeug T1 des ersten Werkzeugträgers 61 aufgebracht wird, gebogen zu werden.

Gleichzeitig kann auch in dieser Konstellation vorteilhaft ein weiteres Werkstück W2 an der zweiten Arbeitsspindel 22 mittels eines Werkzeugs des zweiten Werkzeugträgers 63 bearbeitet werden. Durch weiteres Einfahren der Spindel 22 und des Werkzeugträgers 63 in den Bearbeitungsraum kann das Werkstück W2 weiterhin gleichzeitig auch noch zusätzlich durch ein Werkzeug des Werkzeugrevolvers 62B bearbeitet werden.

### Zweites Ausführungsbeispiel

**Fig. 8** zeigt beispielhaft eine schematische Darstellung einer Vorderansicht einer Werkzeugmaschine gemäß dem zweiten Ausführungsbeispiel der vorliegenden Erfindung. Die Werkzeugmaschine gemäß **Fig. 8** ist eine Drehmaschine mit einem Maschinengestell 1, das einen ersten Trägerabschnitt 1a, einen zweiten Trägerabschnitt 1b und einen zwischen dem ersten und dem zweiten Trägerabschnitt 1a und 1b angeordneten Mittelabschnitt 1c aufweist, wie in **Fig. 1** schematisch dargestellt. Gemäß diesem Ausführungsbeispiel sind die Spindeln 21 und 22 beispielhaft jeweils an den Vorderseiten VS1 und VS2 des ersten und zweiten Trägerabschnitts 1a und 1b angeordnet. Demzufolge wird im Folgenden die erste Vorderseite VS1 des ersten Trägerabschnitts 1a als erste Spindelträgerseite bezeichnet und die zweite Vorderseite VS2 des zweiten Trägerabschnitts 1b wird als zweite Spindelträgerseite bezeichnet.

Die Werkzeugmaschine gemäß **Fig. 8** umfasst eine auf der ersten Spindelträgerseite VS1 des ersten Trägerabschnitts 1a angeordnete, an einem Spindelgehäuse 21a gehaltene erste Arbeitsspindel 21 zur Aufnahme eines ersten Werkstücks W1 und eine der ersten Arbeitsspindel 21 zugewandte, auf der zweiten Spindelträgerseite VS2 des zweiten Trägerabschnitts 1b angeordnete zweite Arbeitsspindel 22 zur Aufnahme eines zweiten Werkstücks W2. Die zweite Arbeitsspindel 22 wird an einem Spindelgehäuse 22a gehalten.

Die Spindelachse der zweiten Arbeitsspindel 22 ist in diesem Ausführungsbeispiel koaxial zu der Spindelachse der ersten Arbeitsspindel 21 ausgerichtet, kann jedoch auch parallel, jedoch nicht koaxial ausgerichtet sein, oder parallel ausgerichtet sein und durch Verfahren koaxial ausrichtbar sein.

In diesem Ausführungsbeispiel ist die zweite Arbeitsspindel 22 auf einem auf Führungen geführten Spindelschlitten angeordnet und in Richtung Z parallel zu den Spindelachsen verfahrbar. Die Führungen (nicht dargestellt) verlaufen in diesem Ausführungsbeispiel beispielhaft an der Spindelträgerseite VS2 des zweiten Trägerabschnitts 1b, können jedoch alternativ auch auf einem Vorsprungabschnitt 1d des Maschinengestells 1 angeordnet sein, der an der Spindelträgerseite VS2 des zweiten Trägerabschnitts 1b angeordnet sein kann. Analog können auch Ausführungsbeispiele vorgesehen werden, bei denen die erste Spindel 21 oder beide Arbeitsspindeln 21 und 22 in Richtung der Spindelachsen verfahrbar sind.

Die Werkzeugmaschine umfasst weiterhin einen auf der ersten Werkzeugträgerseite WTS1 des ersten Trägerabschnitts 1a angeordneten ersten Werkzeugträgerschlitten 51, auf dem ein erster Werkzeugträger 61 angeordnet ist, und einen auf der zweiten Werkzeugträgerseite WTS2 des zweiten Trägerabschnitts 1b angeordneten zweiten Werkzeugträgerschlitten 53, auf dem ein zweiter Werkzeugträger 63 angeordnet ist.

Der erste und der zweite Werkzeugträger 61 und 63 sind in diesem Ausführungsbeispiel als Werkzeugrevolver ausgebildet, die jeweils einen um eine parallel zu den Spindelachsen ausgerichtete Revolverachse drehbar gelagerten, werkzeugtragenden Revolverkopf umfassen. Anstelle eines Werkzeugrevolvers ist es jedoch auch möglich, z.B. eine Fräs-/Bohrspindel mit einer Werkzeugaufnahme für den ersten und/oder zweiten Werkzeugträger 61, 63 vorzusehen.

Erfindungsgemäß ist in dem Ausführungsbeispiel gemäß Fig. 8 ein auf der dritten Werkzeugträgerseite WTS3 des Mittelabschnitts 1c angeordneter dritter Werkzeugträgerschlitten 52 vorgesehen, auf dem ein dritter Werkzeugträger 62 angeordnet ist. Der dritte Werkzeugträgerschlitten 52 ist in vertikaler Richtung Y in **Fig. 8** und insbesondere senkrecht zu den Spindelachsen der ersten und zweiten Arbeitsspindeln 21 und 22 verfahrbar.

Insbesondere ist der dritte Werkzeugträger 62 als Werkzeugrevolver ausgebildet, der zwischen der ersten Arbeitsspindel 21 und der zweiten Arbeitsspindel 22 angeordnet ist, und einen um eine Revolverachse drehbar gelagerten, werkzeugtragenden Revolverkopf 62 umfasst. Die Revolverachse des Revolverkopfs 62 ist in X-Richtung und somit senkrecht zu den Spindelachsen der ersten und zweiten Arbeitsspindeln 21 und 22 ausgerichtet, und weiterhin ist die Revolverachse des Revolverkopfs 62 senkrecht zu der vertikalen Richtung Y ausgerichtet, in der der dritte Werkzeugträgerschlitten 52 verfahrbar ist.

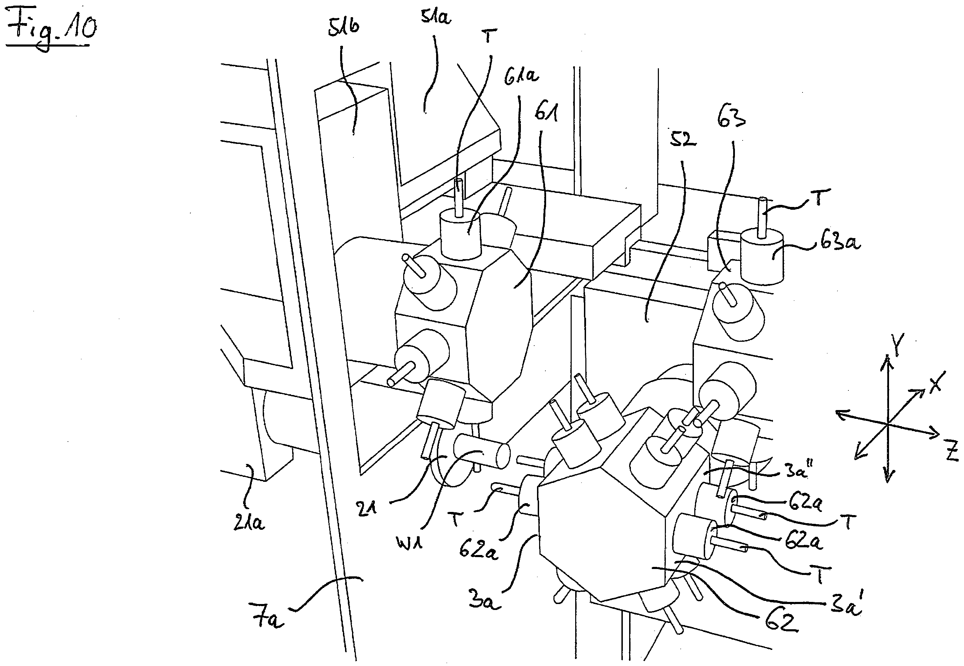

Der Revolverkopf 62 weist eine Mehrzahl von Aufnahmen 3a, 3a' und 3a" (siehe z.B. **Fig. 10**) zum Aufnehmen von werkzeughaltenden Werkzeughaltern 62a auf, die ihrerseits jeweils Werkzeuge T halten. Der Revolverkopf 62 ist als Radial-Revolverkopf ausgebildet, wobei die Aufnahmen 3a, 3a' und 3a" umfangseitig auf dem Revolverkopf 62 angeordnet sind. Der Werkzeugrevolver ist dazu eingerichtet, eine Aufnahme 3a durch Rotation des Revolverkopfs 62 um die Revolverachse mit einer der Arbeitsspindeln 21 bzw. 22 auszurichten, um das von dem an der Aufnahme 3a aufgenommenen Werkzeughalter 62a gehaltene Werkzeug T mit einer der Arbeitsspindeln 21 bzw. 22 auszurichten.

Wie in **Fig. 8** und **Fig. 10** dargestellt, sind die Aufnahmen 3a, 3a' des Revolverkopfs 62 paarweise auf gegenüberliegenden Seiten auf dem Revolverkopf 62 angeordnet, so dass die Werkzeughalter 62a paarweise auf gegenüberliegenden Seiten auf dem Revolverkopf 62 angeordnet sind, und zwar derart, dass jeweils eine erste Aufnahme 3a' mit darin aufgenommenem Werkzeughalter 62a mit der zweiten Arbeitsspindel 22 ausgerichtet ist, wenn eine andere, gegenüberliegende zweite Aufnahme 3a mit darin aufgenommenem Werkzeughalter 62a mit der ersten Arbeitsspindel 21 ausgerichtet ist.

Dies ermöglicht eine vorteilhafte gleichzeitige Ausrichtung von Werkzeugen T auf beide Arbeitsspindeln 21 und 22 bereits nur mit dem einen Werkzeugrevolver mit Revolverkopf 62. In **Fig. 8** ist zum Beispiel ein Werkzeug T1 zur Bearbeitung auf das in der ersten Arbeitsspindel 21 aufgenommene Werkstück W1 ausgerichtet und ein gegenüberliegendes Werkzeug T2 ist zur Bearbeitung auf das in der zweiten Arbeitsspindel 22 aufgenommene Werkstück W2 ausgerichtet. Die Werkstücke T1 und T2 können somit auf besonders zweckmäßige und vorteilhafte Weise mittels des Werkzeugrevolvers 62 gleichzeitig bearbeitet werden.

Weiterhin sind bei der Werkzeugmaschine gemäß **Fig. 8** Bearbeitungsraumwände 7a und 7b vorgesehen, die an Bearbeitungsraumseiten (siehe z.B. BS1 in **Fig. 8**) des Trägerabschnitts 1 angeordnet sind, die sich zwischen den Spindelträgerseiten VS1 und VS2 der Trägerabschnitte 1a und 1b und der dritten Werkzeugträgerseite WTS3 des Mittelabschnitts 1c erstrecken.

Die Bearbeitungswände 7a und 7b bilden vorteilhaft einen Bearbeitungsraum zwischen den Trägerabschnitten 1a und 1b des Maschinengestells 1 aus. Weiterhin erstrecken sich die Bearbeitungswände 7a und 7b vertikal nach oben und horizontal nach vorne über den Maschinengestellkörper hinaus.

Hierbei weisen die Bearbeitungswände 7a und 7b Öffnungen zum Bearbeitungsraum auf, durch die sich die ersten und zweiten Arbeitsspindeln 21 und 22, der erste Werkzeugträger 61 und der zweite Werkzeugträger 63 in den Bearbeitungsraum hinein erstrecken. Dies ermöglicht es vorteilhaft, die Gehäuse 21a und 22a der Arbeitsspindeln und den ersten und zweiten Werkzeugträgerschlitten 51 und 53 vor Spänen aus dem Bearbeitungsraum zu schützen, ohne aufwendige Schutzabdeckungen für die Schlitten und Gehäuse zu benötigen.

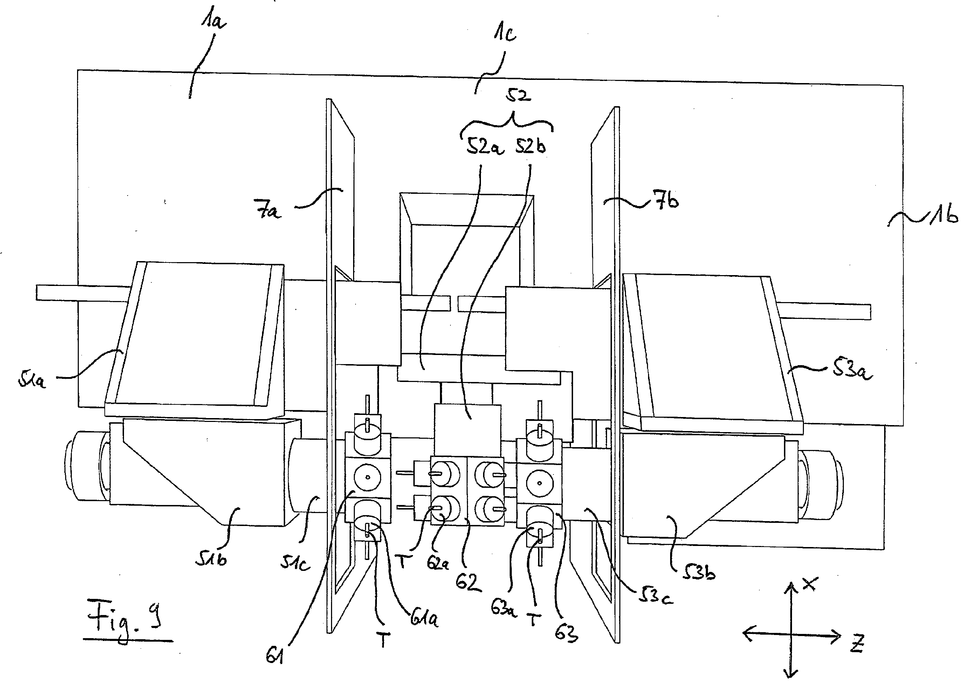

**Fig. 9** zeigt beispielhaft eine schematische Darstellung einer Draufsicht der Werkzeugmaschine gemäß dem zweiten Ausführungsbeispiel der vorliegenden Erfindung aus **Fig. 8****.** In **Fig. 9** ist gezeigt, dass der erste und zweite Werkzeugträgerschlitten 51 und 53 in dieser Ausführungsform als Kreuzschlitten ausgebildet sind, wobei ein erster jeweiliger Teilschlitten 51a bzw. 53a in Richtung Z der Spindelachsen verfahrbar auf der jeweiligen Werkzeugträgerseite WTS1 bzw. WTS2 des jeweiligen Trägerabschnitts 1a bzw. 1b angeordnet ist.

Auf dem ersten jeweiligen Teilschlitten 51a bzw. 53a sind wiederum jeweilige verfahrbare Teilschlitten 51b bzw. 53b angeordnet, an denen die Werkzeugrevolver jeweils an Gehäusen 51c und 53c drehbar gelagert sind um Revolverachsen, die sich parallel zu den Spindelachsen erstrecken. Die Gehäuse 51c und 53c können hierbei Antriebe zum Steuern der Revolver umfassen und dienen weiterhin dazu, sich von den neben den Spindelgehäusen 21a und 22a angeordneten (relativ zu den Spindelachsen gesehen) Teilschlitten in den Bearbeitungsraum hinein zu erstrecken, derart dass die Werkzeugträger 61 und 63 im Bearbeitungsraum neben den Spindeln 21a und 22a angeordnet werden können (relativ zu den Spindelachsen gesehen).

In diesem Ausführungsbeispiel sind die zweiten Teilschlitten 51b bzw. 53b senkrecht zu den Spindelachsen verfahrbar, insbesondere in der gleichen Richtung Y, wie der zweite Werkzeugträgerschlitten 52, d.h. beispielsweise in vertikaler Richtung in dieser Ausführungsform.

**Fig. 10** zeigt beispielhaft eine schematische Darstellung einer Detailansicht des Bearbeitungsraums der Werkzeugmaschine gemäß dem zweiten Ausführungsbeispiel der vorliegenden Erfindung aus **Fig. 8****.**

In **Fig. 10** ist erkennbar, dass der Werkzeugrevolver 62 gemäß dieser Ausführungsform als Doppelrevolverkopf ausgebildet ist, wobei jede Seite des Revolverkopfs 62 zumindest zwei Aufnahmen 3a' und 3a" aufweist, die in Richtung X der Revolverachse jeweils nebeneinander angeordnet sind.

Der Revolverkopf 62 ist gemäß dieser Ausführungsform für die Ausrichtung der Werkzeuge T bei koaxialen Arbeitsspindeln in Richtung X der Revolverachse verfahrbar, derart, dass der Werkzeugrevolver dazu eingerichtet ist, durch Verfahren des Revolverkopfs 62 in Richtung X der Revolverachse eine erste oder eine zweite Aufnahme 3a' bzw. 3a" einer Seite des Revolverkopfes mit einer der Arbeitsspindeln 21 bzw. 22 auszurichten. Hierbei kann eine auf dem Werkzeugträgerschlitten 52a angeordnete Teleskopachseinheit 52b vorgesehen sein, derart, dass der Revolverkopf 62 mittels der Teleskopachseinheit 52b in Richtung X verfahrbar ist (siehe **Fig**. **9**).

Zusammenfassend ermöglicht es die vorliegende Erfindung eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen bei gleichzeitiger kompakter Bauweise der Werkzeugmaschine und mit für den Bearbeiter möglichst gut einsehbarem Bearbeitungsraum ermöglicht wird.

## Patentansprüche

1. Werkzeugmaschine, umfassend:
- ein Maschinengestell (1) mit einem eine erste Werkzeugträgerseite (WTS1) aufweisenden ersten Trägerabschnitt (1a), einem eine zweite Werkzeugträgerseite (WTS2) aufweisenden zweiten Trägerabschnitt (1b) und einem zwischen dem ersten und dem zweiten Trägerabschnitt angeordneten Mittelabschnitt (1c), der eine dritte Werkzeugträgerseite (WTS3) aufweist,
wobei die erste Werkzeugträgerseite (WTS1) des ersten Trägerabschnitts (1a) und die zweite Werkzeugträgerseite (WTS2) des zweiten Trägerabschnitts (1b) auf einer gleichen ersten Seite des Maschinengestells (1) angeordnet sind, und die dritte Werkzeugträgerseite (WTS3) des Mittelabschnitts (1c) auf einer zweiten Seite des Maschinengestells (1) angeordnet ist;
- eine an dem ersten Trägerabschnitt (1a) angeordnete erste Arbeitsspindel (21) zur Aufnahme eines ersten Werkstücks (W1) und eine der ersten Arbeitsspindel (21) zugewandte, an dem zweiten Trägerabschnitt (1b) angeordnete zweite Arbeitsspindel (22) zur Aufnahme eines zweiten Werkstücks (W2), wobei die Spindelachse der zweiten Arbeitsspindel (22) parallel oder koaxial zu der Spindelachse der ersten Arbeitsspindel (21) ausgerichtet ist;
- einen auf der ersten Werkzeugträgerseite (WTS1) des ersten Trägerabschnitts (1a) angeordneten ersten Werkzeugträgerschlitten (51), auf dem ein erster Werkzeugträger (61) angeordnet ist und einen auf der zweiten Werkzeugträgerseite (WTS2) des zweiten Trägerabschnitts (1b) angeordneten zweiten Werkzeugträgerschlitten (53), auf dem ein zweiter Werkzeugträger (63) angeordnet ist; und
- einen auf der dritten Werkzeugträgerseite (WTS3) des Mittelabschnitts (1c) angeordneten dritten Werkzeugträgerschlitten (52), auf dem ein dritter Werkzeugträger (62) angeordnet ist,
wobei der dritte Werkzeugträgerschlitten (52) in einer ersten Richtung (X2; Y) quer oder senkrecht zu den Spindelachsen der ersten und zweiten Arbeitsspindeln (21, 22) verfahrbar ist, und
wobei der dritte Werkzeugträger (62) zwischen der ersten Arbeitsspindel (21) und der zweiten Arbeitsspindel (22) angeordnet ist;
**dadurch gekennzeichnet, dass**
die den ersten Werkzeugträgerschlitten (51) tragende erste Werkzeugträgerseite (WTS1) des ersten Trägerabschnitts (1a) und die den zweiten Werkzeugträgerschlitten (53) tragende zweite Werkzeugträgerseite (WTS2) des zweiten Trägerabschnitts (1b) eine erste Ebene aufspannen, die schräg zu einer zweiten Ebene ausgerichtet ist, die von der den dritten Werkzeugträgerschlitten (52) tragenden dritten Werkzeugträgerseite (WTS3) des Mittelabschnitts (1c) aufgespannt wird.

2. Werkzeugmachine nach Anspruch 1, **dadurch gekennzeichnet, dass**
die erste und/oder zweite Arbeitsspindel (21; 22) in Richtung (Z) der Spindelachsen verfahrbar ist.

3. Werkzeugmaschine nach Anspruch 1 oder 2, **dadurch gekennzeichnet, dass**
die zweite Ebene relativ zu auf der zweiten Seite des Maschinengestells angeordneten Seiten des ersten und zweiten Trägerabschnitts (1a, 1b) zum Maschinengestell (1) hin eingerückt ist.

4. Werkzeugmaschine nach einem der vorhergehenden Ansprüche, **dadurch gekennzeichnet, dass**
eine dem zweiten Trägerabschnitt (1b) zugewandte Seite (BS1) des ersten Trägerabschnitts (1a), die dritte Werkzeugträgerseite (WTS3) des Mittelabschnitts (1c) und eine dem ersten Trägerabschnitt (1a) zugewandte Seite (BS2) des zweiten Trägerabschnitts (1c) einen Bearbeitungsraum im Maschinengestell (1) ausbilden.

5. Werkzeugmaschine nach einem der vorhergehenden Ansprüche, **dadurch gekennzeichnet, dass**
die erste Arbeitsspindel (21) auf der ersten Werkzeugträgerseite (WTS1) des ersten Trägerabschnitts (1a) angeordnet ist und/oder die zweite Arbeitsspindel (22) auf der zweiten Werkzeugträgerseite (WTS2) des ersten Trägerabschnitts (1b) angeordnet ist.

6. Werkzeugmaschine nach einem der Ansprüche 1 bis 4, **dadurch gekennzeichnet, dass**
die erste Arbeitsspindel (21) auf einer ersten Spindelträgerseite (VS1) des ersten Trägerabschnitts (1a) angeordnet ist und/oder die zweite Arbeitsspindel (22) auf einer zweiten Spindelträgerseite (VS2) des zweiten Trägerabschnitts (1b) angeordnet ist, wobei die erste Spindelträgerseite (VS1) und die zweite Spindelträgerseite (VS2) auf der gleichen zweiten Seite des Maschinengestells (1) angeordnet sind, wie die dritte Werkzeugträgerseite (WTS3).

7. Werkzeugmaschine nach Anspruch 6, **dadurch gekennzeichnet, dass**
die erste Spindelträgerseite (VS1) des ersten Trägerabschnitts (1a) und die zweite Spindelträgerseite (VS2) des zweiten Trägerabschnitts (1b) im Wesentlichen eine dritte Ebene aufspannen, wobei die erste Ebene im Wesentlichen senkrecht oder schräg zur dritten Ebene ausgerichtet ist.

8. Werkzeugmaschine nach Anspruch 7, **dadurch gekennzeichnet, dass**
die zweite Ebene im Wesentlichen parallel zu der dritten Ebene ausgerichtet ist, wobei die zweite Ebene relativ zur dritten Ebene zum Maschinengestell (1) hin eingerückt ist.

9. Werkzeugmaschine nach einem der vorhergehenden Ansprüche, **dadurch gekennzeichnet, dass**
der dritte Werkzeugträgerschlitten (52) auf Führungen (72a) geführt wird, die auf der dritten Werkzeugträgerseite (WTS3) des Mittelabschnitts (1c) des Maschinengestells (1) befestigt sind und in der ersten Richtung (X2; Y) ausgerichtet sind.

10. Werkzeugmaschine nach einem der vorhergehenden Ansprüche, **dadurch gekennzeichnet, dass**
der erste und/oder zweite Werkzeugträgerschlitten (51; 53) parallel, senkrecht oder quer zu den Spindelachsen verfahrbar ist.

11. Werkzeugmaschine nach zumindest einem der vorhergehenden Ansprüche, **dadurch gekennzeichnet, dass**
der erste und/oder zweite Werkzeugträger (61; 63) in der ersten Richtung (X1; X3; Y) quer zu den Spindelachsen verfahrbar ist, in einer zweiten Richtung (Y1; Y3; X) quer zu der ersten Richtung (X2; Y) des dritten Werkzeugträgers und quer zu den Spindelachsen verfahrbar ist und/oder in einer dritten Richtung (Z1; Z3; Z) parallel zu den Spindelachsen verfahrbar ist.

12. Werkzeugmaschine nach einem der vorhergehenden Ansprüche, **dadurch gekennzeichnet, dass**
der erste und/oder zweite Werkzeugträger (61; 63) als Werkzeugrevolver ausgebildet ist, der einen um eine parallel zu den Spindelachsen ausgerichtete Revolverachse drehbar gelagerten, werkzeugtragenden Revolverkopf umfasst.

13. Werkzeugmaschine nach zumindest einem der vorhergehenden Ansprüche, **dadurch gekennzeichnet, dass**
der dritte Werkzeugträger (62) zumindest einen Werkzeugrevolver (62; 62A; 62B) umfasst.

14. Werkzeugmaschine nach einem der vorhergehenden Ansprüche, **dadurch gekennzeichnet, dass**
der erste und zweite Werkzeugträger (61, 63) im Wesentlichen auf einer gleichen Seite der Spindelachsen angeordnet sind.

## Claims

1. A machine tool comprising:
- a machine frame (1) comprising a first carrier portion (1a) halving a first tool carrier side (WTS1), a second carrier portion (1b) halving a second tool carrier side (WTS2), and a middle portion (1c) arranged between said first and said second carrier portion and having a third tool carrier side (WTS3),
wherein said first tool carrier side (WTS 1) of said first carrier portion (1a) and said second tool carrier side (WTS2) of said second carrier portion (1b) are arranged on a same first side of said machine frame (1), and said third tool carrier side (WTS3) of said middle portion (1c) is arranged on a second side of said machine frame (1);
- a first work spindle (21) arranged on said first carrier portion (1a) for receiving a first workpiece (W1) and a second work spindle (22), facing said first work spindle (21) and arranged on said second carrier portion (1b), for receiving a second workpiece (W2), wherein the spindle axis of said second work spindle (22) is parallel or coaxial to the spindle axis of said first work spindle (21);
- a first tool carrier slide (51), which is arranged on said first tool carrier side (WTS1) of said first carrier portion (1a) and on which a first tool carrier (61) is arranged, and a second tool carrier slide (53), which is arranged on said second tool carrier side (WTS2) of said second carrier portion (1b) and on which a second tool carrier (63) is arranged; and
- a third tool carrier slide (52), which is arranged on said third tool carrier side (WTS3) of said middle portion (1c) and on which a third tool carrier (62) is arranged,
wherein said third tool carrier slide (52) is movable in a first direction (X2, Y) transverse or perpendicular to the spindle axes of said first work spindle and second work spindle (21, 22), and
wherein said third tool carrier (62) is arranged between said first work spindle (21) and said second work spindle (22),
**characterized in that**
said first tool carrier side (WTS1) of said first carrier portion (1a) supporting said first tool carrier slide (51) and said second tool carrier side (WTS2) of said second carrier portion (1b) supporting said second tool carrier slide (53) substantially span a first plane, which is inclined with respect to a second plane, which is substantially spanned by said third tool carrier side (WTS3) of said middle portion (1c) supporting said third tool carrier slide (52),

2. The machine tool according to claim 1 **characterized in that**
said first and/or second work spindles (21, 22) are movable in the direction (Z) of the spindle axes.

3. The machine tool according to claim 1 or claim 2 **characterized in that**
said second plane is indented towards said machine frame (1) with respect to sides of said first and second carrier portions (1a, 1b) arranged on the second side of said machine frame.

4. The machine tool according to one of the preceding claims **characterized in that**
a side (BS1) of said first carrier portion (1a) facing said second carrier portion (1b), said third tool carrier side (WTS3) of said middle portion (1c), and a side (BS2) of said second carrier portion (1c) facing said first carrier portion (1a) form a machining space in said machine frame (1).

5. The machine tool according to one of the preceding claims **characterized in that**
said first work spindle (21) is arranged on said first tool carrier side (WTS2) of said first carrier portion (1a) and/or said second work spindle (22) is arranged on said second tool carrier side (WTS2) of said first carrier portion (1b).

6. The machine tool of one according to claims 1 to 4 **characterized in that**
said first work spindle (21) is arranged on a first spindle carrier side (VS1) of said first carrier portion (1a) and/or said second work spindle (22) is arranged on a second spindle carrier side (VS2) of said second carrier portion (1b), said first spindle carrier side (VS1) and said second spindle carrier side (VS2) being arranged on the same second side of said machine frame (1) as said third tool carrier side (WTS3).

7. The machine tool according to claim 6 **characterized in that**
said first spindle carrier side (VS1) of said first carrier portion (1a) and said second spindle carrier side (VS2) of said second carrier portion (1b) substantially span a third plane, said first plane being substantially perpendicular or inclined with respect to said third plane.

8. The machine tool according to claim 7 **characterized in that**
said second plane is substantially parallel to said third plane, said second plane being indented towards said machine frame (1) with respect to said third plane.

9. The machine tool according to one of the preceding claims **characterized in that**
said third tool carrier slide (52) is guided on guideways (72a) which are fixed on said third tool carrier side (WTS3) of said middle portion (1c) of said machine frame (1) and are oriented in the first direction (X2, Y).

10. The machine tool according to one of the preceding claims **characterized in that**
said first and/or second tool carrier slides (51, 53) are movable in parallel, perpendicularly or transversely to the spindle axes.

11. The machine tool of at least one of the preceding claims **characterized in that**
said first and/or second tool carrier (61, 63) is movable in the first direction (X1, X3, Y) transverse to the spindle axes, in a second direction (Y1, Y3, X) transverse to the first direction (X2, Y) of said third tool carrier (62) and transverse to the spindle axes, and/or in a third direction (Z1, Z3, Z) parallel to the spindle axes.

12. The machine tool according to one of the preceding claims **characterized in that**
said first and/or second tool carrier (61, 63) is configured as a tool turret, which comprises a tool-carrying turret head mounted rotatably about a turret axis parallel to the spindle axes.

13. The machine tool of at least one of the preceding claims **characterized in that**
said third tool carrier (62) comprises at least one tool turret (62, 62A, 62B).

14. The machine tool according to one of the preceding claims **characterized in that**
said first and second tool carriers (61, 63) are arranged substantially on the same side of the spindle axes.

## Revendications

1. Machine-outil, comportant :
- un bâti de machine (1) qui comprend une première portion de support (1a) présentant un premier côté porte-outil (WTS1), une seconde portion de support (1b) présentant un second côté porte-outil (WTS2), et une portion centrale (1c) agencée entre les première et seconde portions de support et présentant un troisième côté porte-outil (WTS3) ;
dans laquelle le premier côté porte-outil (WTS1) de la première portion de support (1a) et le second côté porte-outil (WTS2) de la seconde portion de support (1b) sont agencés sur un même premier côté du bâti de machine (1), et le troisième côté porte-outil (WTS3) de la portion centrale (1c) est agencé sur un second côté du bâti de machine (1) ;
- une première broche de travail (21) agencée sur la première portion de support (1a) et destinée à recevoir une première pièce à oeuvrer (W1), et une seconde broche de travail (22) agencée sur la seconde portion de support (1b), tournée vers la première broche de travail (21) et destinée à recevoir une seconde pièce à oeuvrer (W2), l'axe de la seconde broche (22) étant orienté parallèlement ou coaxialement à l'axe de la seconde broche de travail (21) ;
- un premier chariot porte-outil (51) agencé sur le premier côté porte-outil (WTS1) de la première portion de support (1a), sur lequel est agencé un premier porte-outil (61), et un second chariot porte-outil (53) agencé sur le second côté porte-outil (WTS2) de la seconde portion de support (1 b), sur lequel est agencé un second porte-outil (63) ; et
- un troisième chariot porte-outil (52) agencé sur fe troisième côté porte-outil (WTS3) de la portion centrale (1c), sur lequel est agencé un troisième porte-outil (62),
dans laquelle le troisième chariot porte-outil (52) est mobile dans une première direction (X2 ; Y) transversalement ou perpendiculairement aux axes des première et seconde broches de travail (21, 22),
et le troisième porte-outil (62) est agencé entre la première broche de travail (21) et la seconde broche de travail (22) ;
**caractérisée en ce que**
le premier côté porte-outil (WTS1) de la première portion de support (1a), qui porte le premier chariot porte-outil (51), et le second côté porte-outil (WTS2) de la seconde portion de support (1b), qui porte le second chariot porte-outil (53), définissent un premier plan qui est orienté en oblique par rapport à un second plan qui est défini par le troisième côté porte-outil (WTS3) de la portion centrale (1c) portant le troisième chariot porte-outil (52).

2. Machine-outil selon la revendication 1, **caractérisée en ce que**
la première et/ou la seconde broche de travail (21 ; 22) est mobile en direction (Z) des axes des broches.

3. Machine-outil selon la revendication 1 ou 2, **caractérisée en ce que**
le second plan est rétracté vers le bâti de machine (1) par rapport aux côtés des première et seconde portions de support (1a, 1b) disposés sur le second côté du bâti de machine.

4. Machine-outil selon l'une des revendications précédentes, **caractérisée en ce que**
un côté (BS1) de la première portion de support (1a) orienté vers la seconde portion de support (1b), le troisième côté porte-outil (WTS3) de la portion centrale (1c) et un côté (BS2) de la seconde portion de support (1c) tourné vers la première portion de support (1a) forment un espace d'usinage dans le bâti de machine (1).

5. Machine-outil selon l'une des revendications précédentes, **caractérisée en ce que**
la première broche de travail (21) est agencée sur le premier côté porte-outil (WTS1) de la première portion de support (1a) et/ou la seconde broche de travail (22) est agencée sur le second côté porte-outil (WTS2) de la première portion de support (1b).

6. Machine-outil selon l'une des revendications 1 à 4, **caractérisée en ce que**
la première broche de travail (21) est agencée sur un premier côté porte-broche (VS1) de la première portion de support (1a) et/ou la seconde broche de travail (22) est agencée sur un second côté porte-broche (VS2) de la seconde portion de support (1b), le premier côté porte-broche (VS1) et le second côté porte-broche (VS2) étant agencés sur le même second côté du bâti de machine (1) que le troisième côté porte-outil (WTS3).

7. Machine-outil selon la revendication 6, **caractérisée en ce que**
le premier côté porte-broche (VS1) de la première portion de support (1a) et le second côté porte-broche (VS2) de la seconde portion de support (1b) définissent sensiblement un troisième plan, le premier plan étant orienté sensiblement perpendiculairement ou en oblique par rapport au troisième plan.

8. Machine-outil selon la revendication 7, **caractérisée en ce que**
le second plan est orienté sensiblement parallèlement au troisième plan, le second plan étant rétracté par rapport au troisième plan vers le bâti de machine (1).

9. Machine-outil selon l'une des revendications précédentes, **caractérisée en ce que**
le troisième chariot porte-outil (52) est guidé sur des guidages (72a) qui sont fixés sur le troisième côté porte-outil (WTS3) de la portion centrale (1c) du bâti de machine (1) et orientés dans la première direction (X2 ; Y),

10. Machine-outil selon l'une des revendications précédentes, **caractérisée en ce que**
le premier et/ou le second chariot porte-outil (51 ; 53) est mobile parallèlement, perpendiculairement ou transversalement aux axes des broches.

11. Machine-outil selon l'une des revendications précédentes, **caractérisée en ce que**
le premier et/ou le second porte-outil (61 ; 63) est mobile dans la première direction (X1 ; X3 ; Y) transversalement aux axes des broches, dans une seconde direction (Y1 ; Y3 ; X) transversalement à la première direction (X2 ; Y) du troisième porte-outil et transversalement aux axes des broches et/ou dans une troisième direction (Z1 ; Z3 ; Z) parallèlement aux axes des broches.

12. Machine-outil selon l'une des revendications précédentes, **caractérisée en ce que**
le premier et/ou le second porte-outil (61 ; 63) est réalisé sous forme de revolver à outils qui comprend une tourelle de revolver qui est montée en rotation autour d'un axe de revolver orienté parallèlement aux axes des broches et qui porte des outils.

13. Machine-outil selon l'une des revendications précédentes, **caractérisée en ce que**
le troisième porte-outil (62) comprend au moins un revolver à outils (62 ; 62A ; 62B),

14. Machine-outil selon l'une des revendications précédentes, **caractérisée en ce que**
le premier et le second porte-outils (61, 63) sont agencés sensiblement sur un même côté des axes des broches.
